# EUROPEAN PATENT APPLICATION

(11) **EP 4 654 717 A1**
(43) Date of publication of application: **26.11.2025**
(21) Application number: 24744872.3
(22) Date of filing: 17.01.2024
(51) Int. Cl.: H04W 72/21, H04W 72/04, H04W 72/0457, H04L 5/14

(54) **METHOD AND APPARATUS FOR TRANSMITTING AND RECEIVING UPLINK CONTROL CHANNEL IN FULL DUPLEX COMMUNICATION**

(30) Priority: 17.01.2023 KR 20230006949; 16.01.2024 KR 20240006821
(71) Applicant: KT Corporation, Seongnam-si, Gyeonggi-do 13606 (KR)
(72) Inventor: PARK, Kyu Jin, Seongnam-si Gyeonggi-do 13606 (KR)
(74) Representative: Santarelli
(86) International application number: PCT/KR2024/000821
(87) International publication number: WO 2024/155092

(57) **Abstract**

Provided is a method of a terminal for transmitting an uplink control channel in full duplex communication. The method may include receiving uplink control channel configuration information; and transmitting uplink control information by determining an uplink control channel resource, wherein the uplink control channel resource is classified and determined according to whether a symbol assigned for transmission of an uplink control channel includes an SBFD symbol configured with an uplink subband for full duplex communication.

## Description

### Technical Field

The disclosure relates to methods and devices for transmitting and receiving an uplink control channel in a next-generation radio access network (hereinafter, "new radio (NR)").

### Background Art

Recently, the 3rd generation partnership project (3GPP) has approved the "Study on New Radio Access Technology", which is a study item for research on next-generation/5G radio access technology (hereinafter, referred to as "new radio" or "NR"). On the basis of the Study on New Radio Access Technology, Radio Access Network Working Group 1 (RAN WG1) has been discussing frame structures, channel coding and modulation, waveforms, multiple access methods, and the like for the new radio (NR). It is required to design the NR not only to provide an improved data transmission rate as compared with the long term evolution (LTE)/LTE-Advanced, but also to meet various requirements in detailed and specific usage scenarios.

An enhanced mobile broadband (eMBB), massive machine-type communication (mMTC), and ultra reliable and low latency communication (URLLC) are proposed as representative usage scenarios of the NR. In order to meet the requirements of the individual scenarios, it is required to design the NR to have flexible frame structures, compared with the LTE/LTE-Advanced.

Because the requirements for data rates, latency, reliability, coverage, etc. are different from each other, there is a need for a method for efficiently multiplexing a radio resource unit based on different numerologies from other (e.g., subcarrier spacing, subframe, Transmission Time Interval (TTI), etc.) as a method for efficiently satisfying each usage scenario requirement through a frequency band constituting a NR system.

As part of this aspect, there is a need for a specific design that enables uplink control channel transmission/reception in a symbol where full-duplex communication is applied in a wireless network.

### Detailed Description of the Invention

### Technical Problem

The disclosure may provide a method and device for transmitting/receiving an uplink control channel in full-duplex communication.

### Technical Solution

In an aspect, the disclosure may provide a method for transmitting an uplink control channel (physical uplink control channel (PUCCH)) by a UE in full-duplex communication. The method may include receiving uplink control channel configuration information, determining an uplink control channel resource based on at least one of uplink control channel resource indication information (PUCCH resource indicator), index information of a control channel element (CCE) receiving downlink control information, and payload size information of uplink control information, and transmitting the uplink control information through the uplink control channel resource, wherein the uplink control channel resource is distinctly determined according to whether a symbol allocated for transmission of the uplink control channel includes a subband full duplex (SBFD) symbol where an uplink subband for full-duplex communication is configured.

In another aspect, the disclosure may provide a method for receiving an uplink control channel (physical uplink control channel (PUCCH)) by a base station in full-duplex communication. The method may include transmitting uplink control channel configuration information, and receiving the uplink control information through an uplink control channel resource determined based on at least one of uplink control channel resource indication information (PUCCH resource indicator), index information of a control channel element (CCE) transmitting downlink control information, and payload size information of uplink control information, wherein the uplink control channel resource is distinctly determined according to whether a symbol allocated for reception of the uplink control channel includes a subband full duplex (SBFD) symbol where an uplink subband for full-duplex communication is configured.

In another aspect, the disclosure may provide a UE transmitting an uplink control channel (physical uplink control channel (PUCCH)) in full-duplex communication. The UE may include a transmitter, a receiver, and a controller controlling an operation of the transmitter and the receiver, wherein the controller receives uplink control channel configuration information, determines an uplink control channel resource based on at least one of uplink control channel resource indication information (PUCCH resource indicator), index information of a control channel element (CCE) receiving downlink control information, and payload size information of uplink control information, and transmits the uplink control information through the uplink control channel resource, and wherein the uplink control channel resource is distinctly determined according to whether a symbol allocated for transmission of the uplink control channel includes a subband full duplex (SBFD) symbol where an uplink subband for full-duplex communication is configured.

In another aspect, the disclosure may provide a base station receiving an uplink control channel (physical uplink control channel (PUCCH)) in full-duplex communication. The base station may include a transmitter, a receiver, and a controller controlling an operation of the transmitter and the receiver, wherein the controller transmits uplink control channel configuration information and receiving uplink control information through an uplink control channel resource determined based on at least one of uplink control channel resource indication information (PUCCH resource indicator), index information of a control channel element (CCE) transmitting downlink control information, and payload size information of uplink control information, and wherein the uplink control channel resource is distinctly determined according to whether a symbol allocated for reception of the uplink control channel includes a subband full duplex (SBFD) symbol where an uplink subband for full-duplex communication is configured.

### Advantageous Effects

According to the embodiments, an uplink control channel may be efficiently transmitted and received within a slot or symbol where full-duplex communication is applied.

### Brief Description of Drawings

FIG. 1 is a view schematically illustrating an NR wireless communication system in accordance with embodiments of the present disclosure.
FIG. 2 is a view schematically illustrating a frame structure in an NR system in accordance with embodiments of the present disclosure.
FIG. 3 is a view for explaining resource grids supported by a radio access technology in accordance with embodiments of the present disclosure.
FIG. 4 is a view for explaining bandwidth parts supported by a radio access technology in accordance with embodiments of the present disclosure.
FIG. 5 is a view illustrating an example of a synchronization signal block in a radio access technology in accordance with embodiments of the present disclosure.
FIG. 6 is a signal diagram for explaining a random access procedure in a radio access technology in accordance with embodiments of the present disclosure.
FIG. 7 is a view for explaining CORESET.
FIG. 8 is a flowchart illustrating a method of receiving a downlink control channel by a UE according to an embodiment.
FIG. 9 is a flowchart illustrating a method of transmitting a downlink control channel by a base station according to an embodiment.
FIGS. 10 and 11 are views illustrating a TDD frame in which an uplink subband is configured in a downlink slot according to an embodiment.
FIG. 12 is a block diagram illustrating a UE according to an embodiment.
FIG. 13 is a block diagram illustrating a base station according to an embodiment.

### Mode for Carrying out the Invention

Hereinafter, some embodiments of the present disclosure will be described in detail with reference to the accompanying illustrative drawings. In the drawings, like reference numerals are used to denote like elements throughout the drawings, even if they are shown on different drawings. Further, in the following description of the present disclosure, a detailed description of known functions and configurations incorporated herein will be omitted when it may make the subject matter of the present disclosure rather unclear. When the expression "include", "have", "comprise", or the like as mentioned herein is used, a other part may be added unless the expression "only" is used. When an element is expressed in the singular, the element may cover the plural form unless a special mention is explicitly made of the element.

In addition, terms, such as first, second, A, B, (A), (B) or the like may be used herein when describing components of the present disclosure. Each of these terminologies is not used to define an essence, order or sequence of a corresponding component but used merely to distinguish the corresponding component from other component(s).

In describing the positional relationship between components, if two or more components are described as being "connected", "combined", or "coupled" to each other, it should be understood that two or more components may be directly "connected", "combined", or "coupled" to each other, and that two or more components may be "connected", "combined", or "coupled" to each other with another component "interposed" therebetween. In this case, another component may be included in at least one of the two or more components that are "connected", "combined", or "coupled" to each other.

In the description of a sequence of operating methods or manufacturing methods, for example, the expressions using "after", "subsequent to", "next", "before", and the like may also encompass the case in which operations or processes are performed discontinuously unless "immediately" or "directly" is used in the expression.

Numerical values for components or information corresponding thereto (e.g., levels or the like), which are mentioned herein, may be interpreted as including an error range caused by various factors (e.g., process factors, internal or external impacts, noise, etc.) even if an explicit description thereof is not provided.

The wireless communication system in the present specification refers to a system for providing various communication services, such as a voice service and a data service, using radio resources. The wireless communication system may include a user equipment (UE), a base station, a core network, and the like.

Embodiments disclosed below may be applied to a wireless communication system using various radio access technologies. For example, the embodiments may be applied to various radio access technologies such as code division multiple access (CDMA), frequency division multiple access (FDMA), time division multiple access (TDMA), orthogonal frequency division multiple access (OFDMA), single-carrier frequency division multiple access (SC-FDMA), non-orthogonal multiple access (NOMA), or the like. In addition, the radio access technology may refer to respective generation communication technologies established by various communication organizations, such as 3GPP, 3GPP2, Wi-Fi, Bluetooth, IEEE, ITU, or the like, as well as a specific access technology. For example, CDMA may be implemented as a wireless technology such as universal terrestrial radio access (UTRA) or CDMA2000. TDMA may be implemented as a wireless technology such as global system for mobile communications (GSM)/general packet radio service (GPRS)/enhanced data rates for GSM evolution (EDGE). OFDMA may be implemented as a wireless technology such as IEEE (Institute of Electrical and Electronics Engineers) 802.11 (Wi-Fi), IEEE 802.16 (WiMAX), IEEE 802-20, evolved UTRA (E-UTRA), and the like. IEEE 802.16m is evolution of IEEE 802.16e, which provides backward compatibility with systems based on IEEE 802.16e. UTRA is a part of a universal mobile telecommunications system (UMTS). 3GPP (3rd-generation partnership project) LTE (long-term evolution) is a part of E-UMTS (evolved UMTS) using evolved-UMTS terrestrial radio access (E-UTRA), which adopts OFDMA in a downlink and SC-FDMA in an uplink. As described above, the embodiments may be applied to radio access technologies that have been launched or commercialized, and may be applied to radio access technologies that are being developed or will be developed in the future.

The UE used in the specification must be interpreted as a broad meaning that indicates a device including a wireless communication module that communicates with a base station in a wireless communication system. For example, the UE includes user equipment (UE) in WCDMA, LTE, NR, HSPA, IMT-2020 (5G or New Radio), and the like, a mobile station in GSM, a user terminal (UT), a subscriber station (SS), a wireless device, and the like. In addition, the UE may be a portable user device, such as a smart phone, or may be a vehicle, a device including a wireless communication module in the vehicle, and the like in a V2X communication system according to the usage type thereof. In the case of a machine-type communication (MTC) system, the UE may refer to an MTC terminal, an M2M terminal, or a URLLC terminal, which employs a communication module capable of performing machine-type communication.

A base station or a cell in the present specification refers to an end that communicates with a UE through a network and encompasses various coverage regions such as a Node-B, an evolved Node-B (eNB), a gNode-B, a low-power node (LPN), a sector, a site, various types of antennas, a base transceiver system (BTS), an access point, a point (e.g., a transmission point, a reception point, or a transmission/reception point), a relay node, a megacell, a macrocell, a microcell, a picocell, a femtocell, a remote radio head (RRH), a radio unit (RU), a small cell, and the like. In addition, the cell may be used as a meaning including a bandwidth part (BWP) in the frequency domain. For example, the serving cell may refer to an active BWP of a UE.

The various cells listed above are provided with a base station controlling one or more cells, and the base station may be interpreted as two meanings. The base station may be 1) a device for providing a megacell, a macrocell, a microcell, a picocell, a femtocell, or a small cell in connection with a wireless region, or the base station may be 2) a wireless region itself. In the above description 1), the base station may be the devices controlled by the same entity and providing predetermined wireless regions or all devices interacting with each other and cooperatively configuring a wireless region. For example, the base station may be a point, a transmission/reception point, a transmission point, a reception point, and the like according to the configuration method of the wireless region. In the above description 2), the base station may be the wireless region in which a user equipment (UE) may be enabled to transmit data to and receive data from the other UE or a neighboring base station.

In this specification, the cell may refer to coverage of a signal transmitted from a transmission/reception point, a component carrier having coverage of a signal transmitted from a transmission/reception point (or a transmission point), or a transmission/reception point itself.

An uplink (UL) refers to a scheme of transmitting data from a UE to a base station, and a downlink (DL) refers to a scheme of transmitting data from a base station to a UE. The downlink may mean communication or communication paths from multiple transmission/reception points to a UE, and the uplink may mean communication or communication paths from a UE to multiple transmission/reception points. In the downlink, a transmitter may be a part of the multiple transmission/reception points, and a receiver may be a part of the UE. In addition, in the uplink, the transmitter may be a part of the UE, and the receiver may be a part of the multiple transmission/reception points.

The uplink and downlink transmit and receive control information over a control channel, such as a physical downlink control channel (PDCCH) and a physical uplink control channel (PUCCH). The uplink and downlink transmit and receive data over a data channel such as a physical downlink shared channel (PDSCH) and a physical uplink shared channel (PUSCH). Hereinafter, the transmission and reception of a signal over a channel, such as PUCCH, PUSCH, PDCCH, PDSCH, or the like, may be expressed as "PUCCH, PUSCH, PDCCH, PDSCH, or the like is transmitted and received".

For the sake of clarity, the following description will focus on 3GPP LTE/LTE-A/NR (New Radio) communication systems, but technical features of the disclosure are not limited to the corresponding communication systems.

The 3GPP has been developing a 5G (5th-Generation) communication technology in order to meet the requirements of a next-generation radio access technology of ITU-R after studying 4G (4th-generation) communication technology. Specifically, 3GPP is developing, as a 5G communication technology, LTE-A pro by improving the LTE-Advanced technology so as to conform to the requirements of ITU-R and a new NR communication technology that is totally different from 4G communication technology. LTE-A pro and NR all refer to the 5G communication technology. Hereinafter, the 5G communication technology will be described on the basis of NR unless a specific communication technology is specified.

Various operating scenarios have been defined in NR in consideration of satellites, automobiles, new verticals, and the like in the typical 4G LTE scenarios so as to support an enhanced mobile broadband (eMBB) scenario in terms of services, a massive machine-type communication (mMTC) scenario in which UEs spread over a broad region at a high UE density, thereby requiring low data rates and asynchronous connections, and an ultra-reliability and low-latency (URLLC) scenario that requires high responsiveness and reliability and supports high-speed mobility.

In order to satisfy such scenarios, NR introduces a wireless communication system employing a new waveform and frame structure technology, a low-latency technology, a super-high frequency band (mmWave) support technology, and a forward compatible provision technology. In particular, the NR system has various technological changes in terms of flexibility in order to provide forward compatibility. The primary technical features of NR will be described below with reference to the drawings.

### <Overview of NR System>

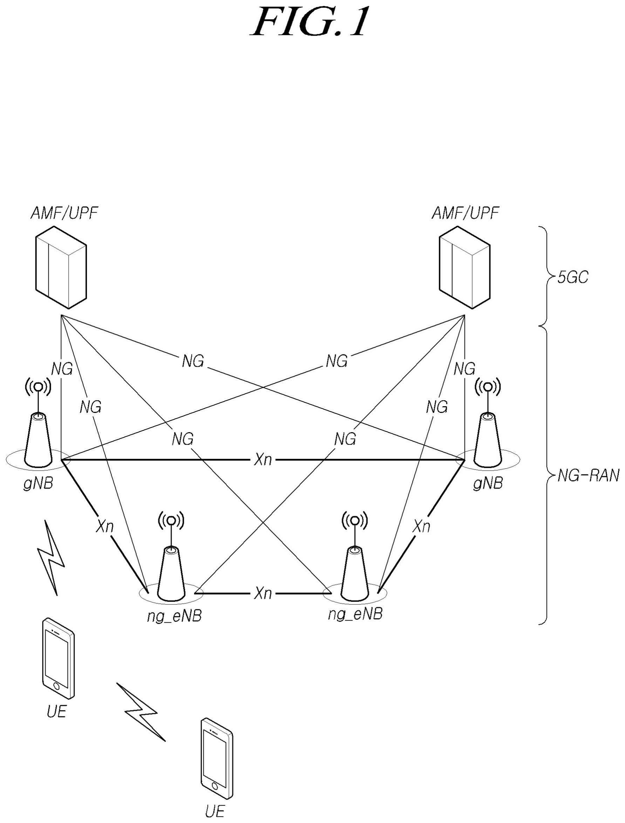

FIG. 1 is a view schematically illustrating an NR system.

Referring to FIG. 1, the NR system is divided into a 5G core network (5GC) and an NG-RAN part. The NG-RAN includes gNBs and ng-eNBs providing user plane (SDAP/PDCP/RLC/MAC/PHY) and user equipment (UE) control plane (RRC) protocol ends. The gNBs or the gNB and the ng-eNB are connected to each other through Xn interfaces. The gNB and the ng-eNB are connected to the 5GC through NG interfaces, respectively. The 5GC may be configured to include an access and mobility management function (AMF) for managing a control plane, such as a UE connection and mobility control function, and a user plane function (UPF) controlling user data. NR supports both frequency bands below 6 GHz (frequency range 1 FR1 FR1) and frequency bands equal to or greater than 6 GHz (frequency range 2 FR2 FR2).

The gNB denotes a base station that provides a UE with an NR user plane and control plane protocol end. The ng-eNB denotes a base station that provides a UE with an E-UTRA user plane and control plane protocol end. The base station described in the present specification should be understood as encompassing the gNB and the ng-eNB. However, the base station may be also used to refer to the gNB or the ng-eNB separately from each other, as necessary.

### <NR Waveform, Numerology, and Frame Structure>

NR uses a CP-OFDM waveform using a cyclic prefix for downlink transmission and uses CP-OFDM or DFT-s-OFDM for uplink transmission. OFDM technology is easy to combine with a multiple-input multiple-output (MIMO) scheme and allows a low-complexity receiver to be used with high frequency efficiency.

Since the three scenarios described above have different requirements for data rates, delay rates, coverage, and the like from each other in NR, it is necessary to efficiently satisfy the requirements for each scenario over frequency bands constituting the NR system. To this end, a technique for efficiently multiplexing radio resources based on a plurality of different numerologies has been proposed.

Specifically, the NR transmission numerology is determined on the basis of subcarrier spacing and a cyclic prefix (CP). As shown in Table 1 below, "µ" is used as an exponential value of 2 so as to be changed exponentially on the basis of 15 kHz.

**[Table 1]**

| µ | Subcarrier spacing | Cyclic prefix | Supported for data | Supported for synch |
|---|---|---|---|---|
| 0 | 15 | normal | Yes | Yes |
| 1 | 30 | normal | Yes | Yes |
| 2 | 60 | Normal, Extended | Yes | No |
| 3 | 120 | normal | Yes | Yes |
| 4 | 240 | normal | No | Yes |

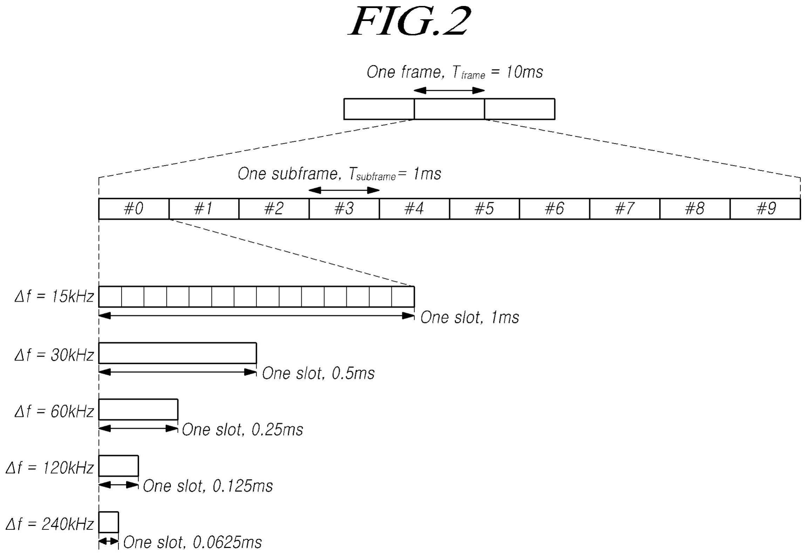

As shown in Table 1 above, NR may have five types of numerologies according to subcarrier spacing. This is different from LTE, which is one of the 4G-communication technologies, in which the subcarrier spacing is fixed to 15 kHz. Specifically, in NR, subcarrier spacing used for data transmission is 15, 30, 60, or 120 kHz, and subcarrier spacing used for synchronization signal transmission is 15, 30, 120, or 240 kHz. In addition, an extended CP is applied only to the subcarrier spacing of 60 kHz. A frame that includes 10 subframes each having the same length of 1 ms and has a length of 10 ms is defined in the frame structure in NR. One frame may be divided into half frames of 5 ms, and each half frame includes 5 subframes. In the case of a subcarrier spacing of 15 kHz, one subframe includes one slot, and each slot includes 14 OFDM symbols. FIG. 2 is a view for explaining a frame structure in an NR system to which the present embodiment may be applied. Referring to FIG. 2, a slot includes 14 OFDM symbols, which are fixed, in the case of a normal CP, but the length of the slot in the time domain may be varied depending on subcarrier spacing. For example, in the case of a numerology having a subcarrier spacing of 15 kHz, the slot is configured to have the same length of 1 ms as that of the subframe. On the other hand, in the case of a numerology having a subcarrier spacing of 30 kHz, the slot includes 14 OFDM symbols, but one subframe may include two slots each having a length of 0.5 ms. That is, the subframe and the frame may be defined using a fixed time length, and the slot may be defined as the number of symbols such that the time length thereof is varied depending on the subcarrier spacing.

NR defines a basic unit of scheduling as a slot and also introduces a minislot (or a subslot or a non-slot-based schedule) in order to reduce a transmission delay of a radio section. If wide subcarrier spacing is used, the length of one slot is shortened in inverse proportion thereto, thereby reducing a transmission delay in the radio section. A minislot (or subslot) is intended to efficiently support URLLC scenarios, and the minislot may be scheduled in 2, 4, or 7 symbol units.

In addition, unlike LTE, NR defines uplink and downlink resource allocation as a symbol level in one slot. In order to reduce a HARQ delay, the slot structure capable of directly transmitting HARQ ACK/NACK in a transmission slot has been defined. Such a slot structure is referred to as a "self-contained structure", which will be described.

NR was designed to support a total of 256 slot formats, and 62 slot formats thereof are used in 3GPP Rel-15. In addition, NR supports a common frame structure constituting an FDD or TDD frame through combinations of various slots. For example, NR supports i) a slot structure in which all symbols of a slot are configured for a downlink, ii) a slot structure in which all symbols are configured for an uplink, and iii) a slot structure in which downlink symbols and uplink symbols are mixed. In addition, NR supports data transmission that is scheduled to be distributed to one or more slots. Accordingly, the base station may inform the UE of whether the slot is a downlink slot, an uplink slot, or a flexible slot using a slot format indicator (SFI). The base station may inform a slot format by instructing, using the SFI, the index of a table configured through UE-specific RRC signaling. Further, the base station may dynamically instruct the slot format through downlink control information (DCI) or may statically or quasi-statically instruct the same through RRC signaling.

### <Physical Resources of NR>

With regard to physical resources in NR, antenna ports, resource grids, resource elements, resource blocks, bandwidth parts, and the like are taken into consideration.

The antenna port is defined to infer a channel carrying a symbol on an antenna port from the other channel carrying another symbol on the same antenna port. If large-scale properties of a channel carrying a symbol on an antenna port can be inferred from the other channel carrying a symbol on another antenna port, the two antenna ports may have a quasi-co-located or quasi-co-location (QC/QCL) relationship. The large-scale properties include at least one of delay spread, Doppler spread, a frequency shift, an average received power, and a received timing.

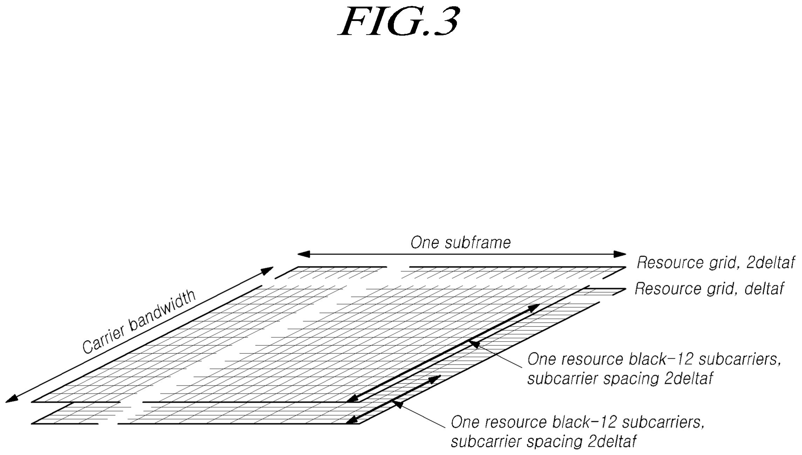

FIG. 3 illustrates resource grids supported by a radio access technology in accordance with embodiments of the present disclosure.

Referring to FIG. 3, resource grids may exist according to respective numerologies because NR supports a plurality of numerologies in the same carrier. In addition, the resource grids may exist depending on antenna ports, subcarrier spacing, and transmission directions.

A resource block includes 12 subcarriers and is defined only in the frequency domain. In addition, a resource element includes one OFDM symbol and one subcarrier. Therefore, as shown in FIG. 3, the size of one resource block may be varied according to the subcarrier spacing. Further, "Point A" that acts as a common reference point for the resource block grids, a common resource block, and a virtual resource block are defined in NR.

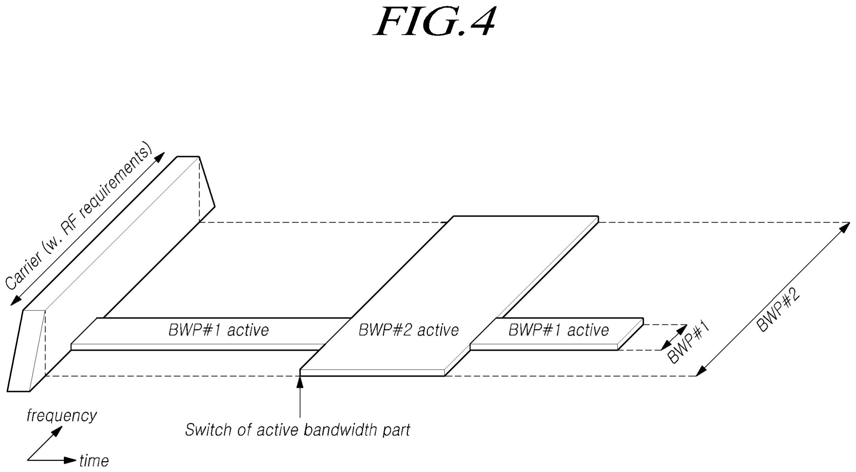

FIG. 4 illustrates bandwidth parts supported by a radio access technology in accordance with embodiments of the present disclosure.

Unlike LTE in which the carrier bandwidth is fixed to 20 MHz, the maximum carrier bandwidth is configured as 50 MHz to 400 MHz depending on the subcarrier spacing in NR. Therefore, it is not assumed that all UEs use the entire carrier bandwidth. Accordingly, as shown in FIG. 4, bandwidth parts (BWPs) may be specified within the carrier bandwidth in NR so that the UE may use the same. In addition, the bandwidth part may be associated with one numerology, may include a subset of consecutive common resource blocks, and may be activated dynamically over time. The UE has up to four bandwidth parts in each of the uplink and the downlink. The UE transmits and receives data using an activated bandwidth part during a given time.

In the case of a paired spectrum, uplink and downlink bandwidth parts are configured independently. In the case of an unpaired spectrum, in order to prevent unnecessary frequency re-tuning between a downlink operation and an uplink operation, the downlink bandwidth part and the uplink bandwidth part are configured in pairs to share a center frequency.

### <Initial Access in NR>

In NR, a UE performs a cell search and a random access procedure in order to access and communicates with a base station.

The cell search is a procedure of the UE for synchronizing with a cell of a corresponding base station using a synchronization signal block (SSB) transmitted from the base station and acquiring a physical-layer cell ID and system information.

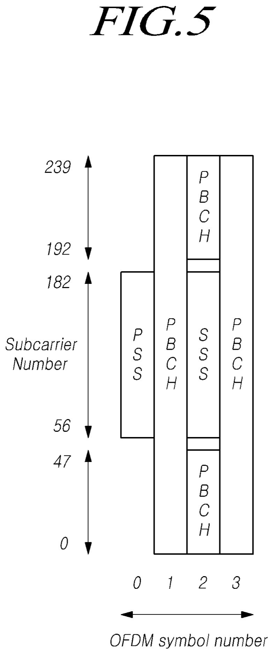

FIG. 5 illustrates an example of a synchronization signal block in a radio access technology in accordance with embodiments of the present disclosure.

Referring to FIG. 5, the SSB includes a primary synchronization signal (PSS) and a secondary synchronization signal (SSS), which occupy one symbol and 127 subcarriers, and PBCHs spanning three OFDM symbols and 240 subcarriers.

The UE monitors the SSB in the time and frequency domain, thereby receiving the SSB.

The SSB may be transmitted up to 64 times for 5 ms. A plurality of SSBs are transmitted by different transmission beams within a time of 5 ms, and the UE performs detection on the assumption that the SSB is transmitted every 20 ms based on a specific beam used for transmission. The number of beams that may be used for SSB transmission within 5 ms may be increased as the frequency band is increased. For example, up to 4 SSB beams may be transmitted at a frequency band of 3 GHz or less, and up to 8 SSB beams may be transmitted at a frequency band of 3 to 6 GHz. In addition, the SSBs may be transmitted using up to 64 different beams at a frequency band of 6 GHz or more.

One slot includes two SSBs, and a start symbol and the number of repetitions in the slot are determined according to subcarrier spacing as follows.

Unlike the SS in the typical LTE system, the SSB is not transmitted at the center frequency of a carrier bandwidth. That is, the SSB may also be transmitted at the frequency other than the center of the system band, and a plurality of SSBs may be transmitted in the frequency domain in the case of supporting a broadband operation. Accordingly, the UE monitors the SSB using a synchronization raster, which is a candidate frequency position for monitoring the SSB. A carrier raster and a synchronization raster, which are the center frequency position information of the channel for the initial connection, were newly defined in NR, and the synchronization raster may support a fast SSB search of the UE because the frequency spacing thereof is configured to be wider than that of the carrier raster.

The UE may acquire an MIB over the PBCH of the SSB. The MIB (master information block) includes minimum information for the UE to receive remaining minimum system information (RMSI) broadcast by the network. In addition, the PBCH may include information on the position of the first DM-RS symbol in the time domain, information for the UE to monitor SIB1 (e.g., SIB1 numerology information, information related to SIB1 CORESET, search space information, PDCCH-related parameter information, etc.), offset information between the common resource block and the SSB (the position of an absolute SSB in the carrier is transmitted via SIB1), and the like. The SIB1 numerology information is also applied to some messages used in the random access procedure for the UE to access the base station after completing the cell search procedure. For example, the numerology information of SIB1 may be applied to at least one of the messages 1 to 4 for the random access procedure.

The above-mentioned RMSI may mean SIB1 (system information block 1), and SIB1 is broadcast periodically (e.g., 160 ms) in the cell. SIB1 includes information necessary for the UE to perform the initial random access procedure, and SIB1 is periodically transmitted over a PDSCH. In order to receive SIB1, the UE must receive numerology information used for the SIB1 transmission and the CORESET (control resource set) information used for scheduling of SIB1 over a PBCH. The UE identifies scheduling information for SIB1 using SI-RNTI in the CORESET. The UE acquires SIB1 on the PDSCH according to scheduling information. The remaining SIBs other than SIB1 may be periodically transmitted, or the remaining SIBs may be transmitted according to the request of the UE.

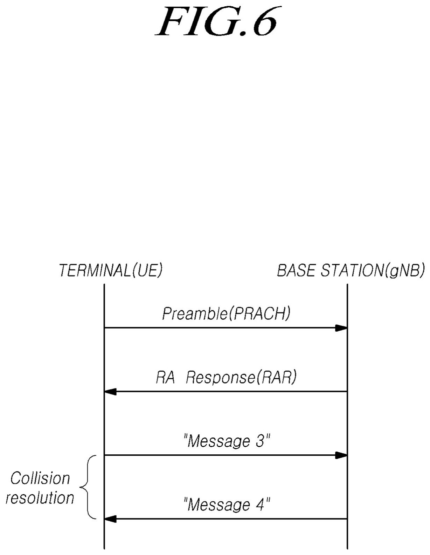

FIG. 6 is a view for explaining a random access procedure in a radio access technology to which the present embodiment is applicable.

Referring to FIG. 6, if a cell search is completed, the UE transmits a random access preamble for random access to the base station. The random access preamble is transmitted over a PRACH. Specifically, the random access preamble is periodically transmitted to the base station over the PRACH that includes consecutive radio resources in a specific slot repeated. In general, a contention-based random access procedure is performed when the UE makes initial access to a cell, and a non-contention-based random access procedure is performed when the UE performs random access for beam failure recovery (BFR).

The UE receives a random access response to the transmitted random access preamble. The random access response may include a random access preamble identifier (ID), UL Grant (uplink radio resource), a temporary C-RNTI (temporary cell-radio network temporary identifier), and a TAC (time alignment command). Since one random access response may include random access response information for one or more UEs, the random access preamble identifier may be included in order to indicate the UE for which the included UL Grant, temporary C-RNTI, and TAC are valid. The random access preamble identifier may be an identifier of the random access preamble received by the base station. The TAC may be included as information for the UE to adjust uplink synchronization. The random access response may be indicated by a random access identifier on the PDCCH, i.e., a random access-radio network temporary identifier (RA-RNTI).

Upon receiving a valid random access response, the UE processes information included in the random access response and performs scheduled transmission to the base station. For example, the UE applies the TAC and stores the temporary C-RNTI. In addition, the UE transmits, to the base station, data stored in the buffer of the UE or newly generated data using the UL Grant. In this case, information for identifying the UE must be included in the data.

Lastly, the UE receives a downlink message to resolve the contention.

### <NR CORESET>

The downlink control channel in NR is transmitted in a CORESET (control resource set) having a length of 1 to 3 symbols, and the downlink control channel transmits uplink/downlink scheduling information, an SFI (slot format index), TPC (transmit power control) information, and the like.

As described above, NR has introduced the concept of CORESET in order to secure the flexibility of a system. The CORESET (control resource set) refers to a time-frequency resource for a downlink control signal. The UE may decode a control channel candidate using one or more search spaces in the CORESET time-frequency resource. CORESET-specific QCL (quasi-colocation) assumption is configured and is used for the purpose of providing information on the characteristics of analogue beam directions, as well as delay spread, Doppler spread, Doppler shift, and an average delay, which are the characteristics assumed by existing QCL.

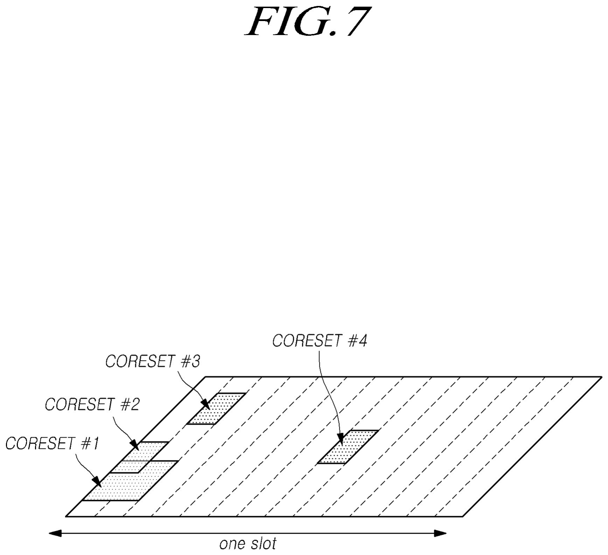

FIG. 7 illustrates CORESET.

Referring to FIG. 7, CORESETs may exist in various forms within a carrier bandwidth in a single slot, and the CORESET may include a maximum of 3 OFDM symbols in the time domain. In addition, the CORESET is defined as a multiple of six resource blocks up to the carrier bandwidth in the frequency domain.

A first CORESET, as a portion of the initial bandwidth part, is designated (e.g., instructed, assigned) through an MIB in order to receive additional configuration information and system information from a network. After establishing a connection with the base station, the UE may receive and configure one or more pieces of CORESET information through RRC signaling.

### Wider bandwidth operations

The typical LTE system supports scalable bandwidth operations for a LTE CC (component carrier). That is, according to a frequency deployment scenario, an LTE provider may configure a bandwidth of a minimum of 1.4 MHz to a maximum of 20 MHz in configuring a single LTE CC, and a normal LTE UE supports a transmission/reception capability of a bandwidth of 20 MHz for a single LTE CC.

However, the NR is designed to support the UE of NR having different transmission/reception bandwidth capabilities over a single wideband NR CC. Accordingly, it is required to configure one or more bandwidth parts (BWPs) including subdivided bandwidths for an NR CC, thereby supporting a flexible and wider bandwidth operation through configuration and activation of different bandwidth parts for respective UEs.

Specifically, one or more bandwidth parts may be configured through a single serving cell configured for a UE in NR, and the UE is defined to activate one downlink (DL) bandwidth part and one uplink (UL) bandwidth part to use the same for uplink/downlink data transmission/reception in the corresponding serving cell. In addition, in the case where a plurality of serving cells is configured for the UE (i.e., the UE to which CA is applied), the UE is also defined to activate one downlink bandwidth part and/or one uplink bandwidth part in each serving cell to use the same for uplink/downlink data transmission/reception by utilizing radio resources of the corresponding serving cell.

Specifically, an initial bandwidth part for an initial access procedure of a UE may be defined in a serving cell; one or more UE-specific bandwidth parts may be configured for each UE through dedicated RRC signaling, and a default bandwidth part for a fallback operation may be defined for each UE.

It is possible to define simultaneously activating and using a plurality of downlink and/or uplink bandwidth parts according to the capability of the UE and the configuration of the bandwidth parts in a serving cell. However, NR rel-15 defined activating and using only one downlink (DL) bandwidth part and one uplink (UL) bandwidth part at a time.

In this specification, a frequency, a frame, a subframe, a resource, a resource block, a region, a band, a subband, a control channel, a data channel, a synchronization signal, various reference signals, various signals, or various messages in relation to NR (New Radio) may be interpreted as meanings used at present or in the past or as various meanings to be used in the future.

Hereinafter, a method for transmitting an uplink control channel (physical downlink control channel (PUCCH)) by a UE in full-duplex communication is described in detail with reference to the related drawings.

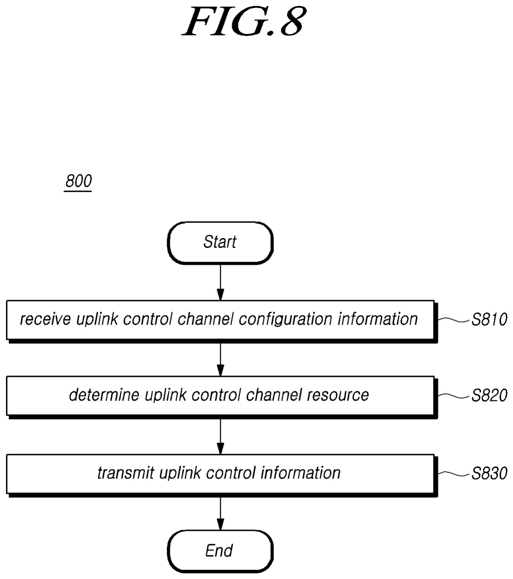

FIG. 8 is a flowchart illustrating a method 800 of a UE for transmitting an uplink control channel according to an embodiment.

Referring to FIG. 8, the UE may receive uplink control channel configuration information (S810).

Full-duplex communication is a technique in which a gNB (e.g., a base station) simultaneously performs downlink (DL) transmission and uplink (UL) reception in the same radio resource. The UE side may simultaneously perform DL reception and UL transmission as well. When the base station supports full-duplex communication based on non-overlapping subband, a specific frequency resource in the same symbol in the TDD carrier is used for downlink transmission, and another frequency resource is used for uplink reception. In other words, a subband may be configured as an arbitrary frequency resource to support a transmission direction other than the transmission direction of DL, UL or flexible set by the TDD configuration information.

In other words, for the TDD carrier, some frequency resources may be utilized for uplink transmission of the UE in a DL slot or DL symbol or may be utilized as a flexible symbol for downlink/uplink transition. Alternatively, some frequency resources in a UL slot or UL symbol may be configured to be utilized for downlink transmission of the base station.

For example, when an uplink subband is configured in a DL slot, the uplink subband may be set in the center of the corresponding frequency band or on the edge of the corresponding frequency band. In this case, a guard band may be configured between the uplink subband and the downlink subband (DL subband) in the corresponding slot. Likewise, when a downlink subband is configured in a UL slot, the downlink subband may be set in the center of the corresponding frequency band or on the edge of the corresponding frequency band. Also in this case, an uplink subband and a guard band may be configured in the frequency domain where no downlink subband is configured in the slot.

As such, a DL slot or symbol including an uplink subband or an uplink slot or symbol including a downlink subband is referred to as a subband full duplex (SBFD) slot or SBFD symbol in the disclosure. In contrast, hereinafter, the term downlink symbol or uplink symbol refers to a non-SBFD symbol where an uplink subband and a downlink subband are not configured. However, the term SBFD is for convenience of description, and the scope of the disclosure is not limited thereby and may be referred to by other terms as necessary.

The UE may receive configuration information for up to four uplink bandwidth parts (UL BWPs) from the base station for the transmission of uplink control information. In this case, one of the configured UL BWPs is activated. Based on this, radio resource allocation for UL transmission is performed. In other words, UL transmission of the UE is performed through the physical resource block (PRB) resources of the UL BWP activated for the UE in the UL slot or symbol (or flexible symbol) configured or indicated by the base station.

The uplink control information (UCI) transmitted by the UE through the uplink control channel may include HARQ-ACK information, scheduling request (SR), channel state information (CSI), or the like. However, this is merely an example, and the technical spirit of the disclosure is not limited to specific uplink control information as long as ti can be substantially applied in the same manner.

The UE may receive uplink control channel configuration information for UCI transmission, including HARQ feedback information, for each uplink bandwidth part configured for the UE. In other words, the UE may receive PUCCH resource configuration information and at least one PUCCH resource set configuration information, each composed of one or more PUCCH resources.

The PUCCH resource configuration information may include PUCCH resource index information, frequency hopping setting information, PUCCH format information, or the like for each PUCCH resource. Further, the PUCCH resource set configuration information may include PUCCH resource set index information and PUCCH resource list information composed of a set of PUCCH resource indexes constituting the PUCCH resource set. Up to four PUCCH resource sets may be configured for one uplink bandwidth part, and up to 32 PUCCH resources may be included in the first PUCCH resource set, while up to 8 PUCCH resources may be included in the remaining PUCCH resource sets.

According to an embodiment, if a subband full duplex (SBFD) symbol setting is made to support SBFD operation for the UE, the UE may further receive PUCCH resource configuration information and PUCCH resource set configuration information for UCI transmission, such as HARQ feedback information, in the SBFD symbol, in addition to the PUCCH resource configuration information and PUCCH resource set configuration information for existing uplink symbols.

Referring back to FIG. 8, the UE may determine an uplink control channel resource based on at least one of uplink control channel resource indication information (PUCCH resource indicator), index information of a control channel element (CCE) receiving downlink control information, and payload size information of uplink control information (S820), and transmit the uplink control information through the uplink control channel resource (S830).

The UE may determine PUCCH resources for transmitting UCI, such as HARQ feedback information, based on PUCCH resource configuration information and PUCCH resource set configuration information. The UE may determine the PUCCH resource set index and PUCCH resource index for determining PUCCH resources, based on the payload size information of the UCI, PUCCH resource indication information included in the DCI format, and the lowest CCE index information in which DCI transmission is performed, respectively.

In this case, the uplink control channel resource may be distinctly determined according to whether a symbol allocated for transmission of the uplink control channel includes an SBFD symbol where an uplink subband for full-duplex communication is configured. According to an example, when the symbol allocated for the transmission of the uplink control channel includes the SBFD symbol, it may correspond to only when all symbols where the transmission of the uplink control channel is performed are the SBFD symbol. Alternatively, according to another example, when the symbol allocated for the transmission of the uplink control channel includes the SBFD symbol, it may correspond to when at least one of all symbols where the transmission of the uplink control channel is performed is the SBFD symbol.

According to an example, when the symbol allocated for the transmission of the uplink control channel includes the SBFD symbol, the uplink control channel resource where the UCI is transmitted may be determined from uplink control channel resources included in the uplink subband in a frequency domain among uplink control channel resources constituting an uplink control channel resource set (PUCCH resource set). In this case, the PUCCH resource allocation through the uplink subband in the SBFD symbol may be indicated based on the existing PUCCH resources and PUCCH resource sets configured for the activated uplink bandwidth part, as in the existing method.

However, in this case, the PUCCH resource allocation in the SBFD symbol may be limited so that PUCCH resource allocation is made only to PUCCH resources completely included in the uplink subband on the frequency axis from the PUCCH resource set composed of the PUCCH resources. In other words, the UE may determine only the PUCCH resources whose entire frequency domain according to the configured PUCCS resources is fully contained in the uplink subband, as PUCCH resources available in the SBFD symbols. Therefore, when the symbols used for UCI transmission include SBFD symbols, the PUCCH resource allocation through the available PUCCH resources may be restricted. In this case, to support UCI transmission, such as HARQ-ACK, through the uplink subband of the SBFD symbol, the PUCCH resource set configured for the UE may include at least one available PUCCH resource.

According to another example, when the symbols allocated for transmission of the uplink control channel include SBFD symbols, the uplink control channel resources where the UCI is transmitted may be determined based on uplink control channel configuration information separately configured for the SBFD symbols. In other words, the UE may further receive separate PUCCH configuration information for the SBFD symbols, distinctly from the existing PUCCH configuration information.

In this case, the uplink subband configuration information for the UE may include separate PUCCH resource configuration information and PUCCH resource set configuration information for UCI transmission through the uplink subband. For example, PUCCH-configULSB, which is separate PUCCH configuration information, may be defined for PUCCH resource allocation for UCI transmission, including HARQ-ACK information of the UE in the SBFD symbol. However, this is merely an example, and the technical spirit of the disclosure is not limited thereto. The PUCCH-configULSB may be configured cell-specifically, i.e., on a per-uplink subband basis, or UE-specifically.

When PUCCH-configULSB is configured cell-specifically, the PUCCH-configULSBcommon configuration information may include reference PUCCH resources for configuring one or more PUCCH resource sets for a uplink subband and the PUCCH resource set size, i.e., information about the number of PRBs, for configuring PUCCH resource sets from the reference PUCCH resources. Accordingly, a separate PUCCH resource table for setting reference PUCCH resources targeting the uplink subband may be defined. In this case, the reference PUCCH resource table may include information such as PUCCH format, first symbol, number of symbols, PRB offset, and set of initial CyclicShift (CS) indexes for each index.

Further, the PUCCH resource table may include one or more tables according to the UCI payload size. Accordingly, PUCCH-configULSBcommon may include separate PUCCH resource sets, i.e., each PUCCH resource table index setting information and information about the number of PRBs, for each UCI payload size. Further, the PRB offset information of the table may be the offset information from the lowest PRB of the uplink subband.

When the PUCCH-configULSB is configured UE-specifically, the PUCCH-configULSB may be configured based on the uplink subband according to the uplink subband configuration made for the UE. Accordingly, the PUCCH-configULSB may include PUCCH resource configuration information and PUCCH resource set configuration information based on the frequency resources of the uplink subband. In this case, the frequency resource allocation of the PUCCH resource may be performed based on the PRB index constituting the uplink subband. For example, the lowest PRB of the uplink subband may be set to 0, and a PRB offset value relative to it may be set. Alternatively, it may be set based on the PRB index of the uplink bandwidth part as in the typical manner.

According to another example, the uplink control channel resource where the UCI is transmitted may be determined based on uplink control channel resource set configuration information separately configured for the SBFD symbol, when the symbol allocated for the transmission of the uplink control channel includes the SBFD symbol. In other words, the existing PUCCH configuration information may include separate PUCCH resource set configuration information to be applied in the uplink subband of the SBFD symbol, in addition to the PUCCH resource configuration information or PUCCH resource set configuration information to be applied in the existing uplink symbols.

In this case, the PUCCH-config configuration information for the uplink bandwidth part including the uplink subband may include PUCCH resource set configuration information for the SBFD symbol, separate from the existing PUCCH resource set configuration information for the uplink symbols not including the uplink subband. In other words, the existing PUCCH configuration information may include separate PUCCH resource set configuration information to be applied in the uplink subband of the SBFD symbol, in addition to the PUCCH resource set configuration information to be applied in the existing uplink symbols.

In this case, the PUCCH resource configuration information included in the PUCCH-config may be commonly applied for the existing PUCCH resource set configuration for the uplink symbols and the new PUCCH resource set configuration for the SBFD symbols. The PUCCH resource set configuration for the SBFD symbol may be set for the PUCCH resources available in the SBFD symbol among the PUCCH resources included in the PUCCH-conFIG. In other words, as described above, only the PUCCH resources whose entire frequency range is completely included in the uplink subband may be restricted to be eligible for inclusion in the PUCCH resource set for the SBFD symbol.

According to another example, the uplink control channel resource where the UCI is transmitted may be determined based on uplink control channel resource set configuration information configured separately for the SBFD symbol, and uplink control channel resource configuration information configured separately for the SBFD symbol, when the symbol allocated for the transmission of the uplink control channel includes the SBFD symbol. In other words, the existing PUCCH configuration information may include PUCCH resource set configuration information for the uplink symbols and separate PUCCH resource set configuration information for the SBFD symbols. Further, the existing PUCCH configuration information may include PUCCH resource configuration information for the uplink symbols and separate PUCCH resource configuration information for the SBFD symbols.

Accordingly, the PUCCH resource allocation including the SBFD symbol may be performed based on the PUCCH resource set configured for the SBFD symbol or on separate PUCCH resources additionally configured for the SBFD symbol. Further, in this case, the frequency resource allocation included in the separate PUCCH resource configuration information may be performed based on the PRB index constituting the uplink subband. For example, the lowest PRB of the uplink subband may be set to 0, and a PRB offset value relative to it may be set. Alternatively, it may be set based on the PRB index of the uplink bandwidth part as in the typical manner.

In order to determine the PUCCH resource to be used for UCI transmission, the UE may determine whether to interpret that the PUCCH resource allocation has been made based on the existing PUCCH resource configuration or based on the PUCCH resource configuration has been made based on the separate PUCCH resource configuration for the SBFD symbol according to the type of symbol indicated for UCI transmission when interpreting the PUCCH resource allocation information of the base station.

According to an embodiment, the UE may interpret it as a PUCCH resource allocation for the SBFD symbol only when all symbols where the uplink control channel transmission is performed are SBFD symbols. Alternatively, the UE may interpret it as a PUCCH resource allocation for the SBFD symbol when at least one symbol among all symbols where the uplink control channel transmission is performed is an SBFD symbol.

In contrast, the UE may interpret the PUCCH resource allocation according to the indication information through the physical layer control signaling (L1 control signaling) received from the base station.

The UE may transmit UCI to the base station using the determined uplink control channel resources.

According to the embodiments described above, an uplink control channel may be transmitted and received efficiently within a slot or symbol to which full-duplex communication is applied.

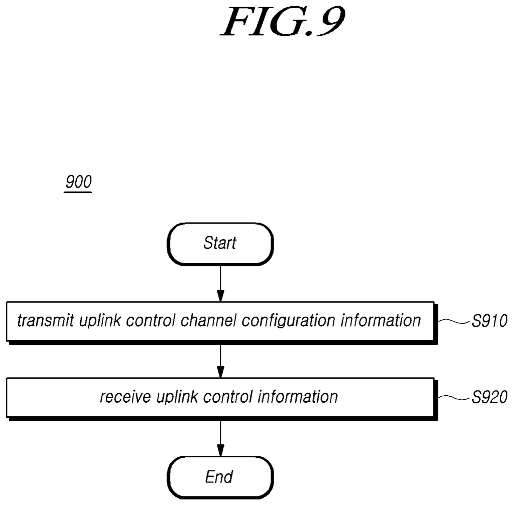

FIG. 9 is a flowchart illustrating a method 900 of a base station for receiving an uplink control channel according to an embodiment. The description above in connection with FIG. 8 may be omitted to avoid redundancy, and in this case, the omitted content may be substantially applied in the same manner to the transmitting UE, as long as it does not contradict the technical spirit of the invention.

Referring to FIG. 9, the base station may transmit uplink control channel configuration information (S910).

The base station may transmit configuration information for up to four uplink bandwidth parts (UL BWPs) to the UE for the transmission of uplink control information. In this case, one of the configured UL BWPs is activated, and based on this, radio resource allocation for UL transmission is performed. In other words, UL transmission of the UE is performed through the physical resource block (PRB) resources of the UL BWP activated for the UE in the UL slot or symbol (or flexible symbol) configured or indicated by the base station.

The uplink control information (UCI) received by the base station through the uplink control channel may include HARQ-ACK information, scheduling request (SR), channel state information (CSI), or the like.

The base station may transmit uplink control channel configuration information for UCI reception, including HARQ feedback information, for each uplink bandwidth part configured for the UE. In other words, the base station may transmit, to the UE, PUCCH resource configuration information and at least one PUCCH resource set configuration information composed of at least one PUCCH resource.

The PUCCH resource configuration information may include PUCCH resource index information, frequency hopping setting information, PUCCH format information, or the like for each PUCCH resource. Further, the PUCCH resource set configuration information may include PUCCH resource set index information and PUCCH resource list information composed of a set of PUCCH resource indexes constituting the PUCCH resource set. Up to four PUCCH resource sets may be configured for one uplink bandwidth part, and up to 32 PUCCH resources may be included for the first PUCCH resource set, while up to 8 PUCCH resources may be included for the remaining PUCCH resource sets.

According to an embodiment, if a subband full duplex (SBFD) symbol setting is made to support SBFD operation for the UE, the base station may further transmit PUCCH resource configuration information and PUCCH resource set configuration information for UCI transmission, such as HARQ feedback information, in the SBFD symbol, in addition to the PUCCH resource configuration information and PUCCH resource set configuration information for existing uplink symbols.

Referring back to FIG. 9, the base station may receive the uplink control information through an uplink control channel resource determined based on at least one of uplink control channel resource indication information (PUCCH resource indicator), index information of a control channel element (CCE) transmitting downlink control information, and payload size information of uplink control information (S920).

The UE may determine PUCCH resources for transmitting UCI, such as HARQ feedback information, based on PUCCH resource configuration information and PUCCH resource set configuration information. The UE may determine the PUCCH resource set index and PUCCH resource index for determining PUCCH resources, based on the payload size information of the UCI, PUCCH resource indication information included in the DCI format, and the lowest CCE index information in which DCI transmission is performed, respectively.

In this case, the uplink control channel resource may be distinctly determined according to whether a symbol allocated for reception of the uplink control channel includes an SBFD symbol where an uplink subband for full-duplex communication is configured. According to an example, when the symbol allocated for the reception of the uplink control channel includes the SBFD symbol, it may correspond to a case where all symbols where the reception of the uplink control channel is performed are the SBFD symbol. Alternatively, according to another example, when the symbol allocated for the reception of the uplink control channel includes the SBFD symbol, it may correspond to a case where at least one of all symbols in which the reception of the uplink control channel is performed is the SBFD symbol.

According to an example, when the symbol allocated for the reception of the uplink control channel includes the SBFD symbol, the uplink control channel resource where the UCI is received may be determined from uplink control channel resources included in the uplink subband in a frequency domain among uplink control channel resources constituting an uplink control channel resource set (PUCCH resource set). In this case, the PUCCH resource allocation through the uplink subband in the SBFD symbol may be indicated based on the existing PUCCH resources and PUCCH resource sets configured for the activated uplink bandwidth part, as in the existing method.

However, in this case, the PUCCH resource allocation in the SBFD symbol may be limited so that PUCCH resource allocation is made only to PUCCH resources completely included in the uplink subband on the frequency axis among the PUCCH resources constituting the PUCCH resource set. In other words, the UE may determine only the PUCCH resources whose the frequency resources are completely included in the uplink subband, as PUCCH resources available in the SBFD symbols. Therefore, when the symbols used for UCI reception include SBFD symbols, the PUCCH resource allocation through the available PUCCH resources may be restricted. In this case, to support UCI transmission, such as HARQ-ACK, through the uplink subband of the SBFD symbol, the PUCCH resource set configured for the UE may include at least one available PUCCH resource.

According to another example, when the symbols allocated for reception of the uplink control channel include SBFD symbols, the uplink control channel resources where the UCI is received may be determined based on uplink control channel configuration information separately configured for the SBFD symbols. In other words, the base station may further transmit separate PUCCH configuration information for the SBFD symbols, distinctly from the existing PUCCH configuration information.

In this case, the uplink subband configuration information for the UE may include separate PUCCH resource configuration information and PUCCH resource set configuration information for UCI transmission through the uplink subband. For example, PUCCH-configULSB, which is separate PUCCH configuration information, may be defined for PUCCH resource allocation for UCI transmission, including HARQ-ACK information of the UE in the SBFD symbol. The PUCCH-configULSB may be configured cell-specifically, i.e., on a per-uplink subband basis, or UE-specifically.

When PUCCH-configULSB is configured cell-specifically, the PUCCH-configULSBcommon configuration information may include reference PUCCH resources for configuring one or more PUCCH resource sets for a uplink subband and the PUCCH resource set size, i.e., information about the number of PRBs, for configuring PUCCH resource sets from the reference PUCCH resources. Accordingly, a separate PUCCH resource table for setting reference PUCCH resources targeting the uplink subband may be defined. In this case, the reference PUCCH resource table may include information such as PUCCH format, first symbol, number of symbols, PRB offset, and a set of initial CyclicShift (CS) indexes for each index.

Further, the PUCCH resource table may include one or more tables according to the UCI payload size. Accordingly, PUCCH-configULSBcommon may include separate PUCCH resource sets, i.e., each PUCCH resource table index setting information and information about the number of PRBs, for each UCI payload size. Further, the PRB offset information of the table may be the offset information from the lowest PRB of the uplink subband.

When the PUCCH-configULSB is configured UE-specifically, the PUCCH-configULSB may be configured based on the uplink subband according to the uplink subband configuration provided for the UE. Accordingly, the PUCCH-configULSB may include PUCCH resource configuration information and PUCCH resource set configuration information based on the frequency resources of the uplink subband. In this case, the frequency resource allocation of the PUCCH resource may be performed based on the PRB index constituting the uplink subband. For example, the lowest PRB of the uplink subband may be set to 0, and a PRB offset value relative to it may be set. Alternatively, it may be set based on the PRB index of the uplink bandwidth part as in the conventional manner.

According to another example, the uplink control channel resource where the UCI is received may be determined based on uplink control channel resource set configuration information separately configured for the SBFD symbol, when the symbol allocated for the reception of the uplink control channel includes the SBFD symbol. In other words, the existing PUCCH configuration information may include separate PUCCH resource set configuration information to be applied to the uplink subband of the SBFD symbol, in addition to the PUCCH resource configuration information or PUCCH resource set configuration information to be applied in the existing uplink symbols.

In this case, the PUCCH-config configuration information for the uplink bandwidth part including the uplink subband may include PUCCH resource set configuration information for the SBFD symbol, separate from the existing PUCCH resource set configuration information for the uplink symbols not including the uplink subband. In other words, the existing PUCCH configuration information may include separate PUCCH resource set configuration information to be applied to the uplink subband of the SBFD symbol, in addition to the PUCCH resource set configuration information to be applied in the existing uplink symbols.

In this case, the PUCCH resource configuration information included in the PUCCH-config may be commonly applied to the existing PUCCH resource set configuration for the uplink symbols and the new PUCCH resource set configuration for the SBFD symbols. In this case, the PUCCH resource set configuration for the SBFD symbol may be set for the PUCCH resources available in the SBFD symbol among the PUCCH resources included in the PUCCH-conFIG. In other words, as described above, only the PUCCH resources whose frequency resources completely included in the uplink subband may be restricted to be included in the PUCCH resource set for the SBFD symbol.

According to another example, the uplink control channel resource where the UCI is received may be determined based on uplink control channel resource set configuration information configured separately for the SBFD symbol, and uplink control channel resource configuration information configured separately for the SBFD symbol, when the symbol allocated for the reception of the uplink control channel includes the SBFD symbol. In other words, the existing PUCCH configuration information may include PUCCH resource set configuration information for the uplink symbols and separate PUCCH resource set configuration information for the SBFD symbols. Further, the existing PUCCH configuration information may include PUCCH resource configuration information for the uplink symbols and separate PUCCH resource configuration information for the SBFD symbols.

Accordingly, the PUCCH resource allocation including the SBFD symbol may be performed based on the PUCCH resource set configured for the SBFD symbol or based on separate PUCCH resources additionally configured for the SBFD symbol. Further, in this case, the frequency resource allocation included in the separate PUCCH resource configuration information may be performed based on the PRB index constituting the uplink subband. For example, the lowest PRB of the uplink subband may be set to 0, and a PRB offset value relative to it may be set. Alternatively, it may be set based on the PRB index of the uplink bandwidth part as in the conventional manner.

In order to determine the PUCCH resource to be used for UCI transmission, the UE may determine whether to interpret that the PUCCH resource allocation has been made based on the existing PUCCH resource configuration or based on the separate PUCCH resource configuration for the SBFD symbol according to the type of symbol indicated for UCI transmission when interpreting the PUCCH resource allocation information of the base station.

According to an embodiment, the UE may interpret it as a PUCCH resource allocation for the SBFD symbol only when all symbols where the uplink control channel transmission is performed are SBFD symbols. Alternatively, the UE may interpret the allocation as being the SBFD symbol when at least one symbol among all symbols where the uplink control channel transmission is performed is an SBFD symbol.

In contrast, the base station may transmit indication information for interpreting the PUCCH resource allocation of the UE through physical layer control signaling (L1 control signaling).

The base station may receive UCI from the UE using the determined uplink control channel resources.

According to the embodiments described above, an uplink control channel may be efficiently transmitted and received within a slot or symbol to which full-duplex communication is applied.

Hereinafter, more embodiments related to the method for transmitting/receiving an uplink control channel in full-duplex communication are described in detail with reference to related drawings.

The disclosure proposes a method for allocating resources for an uplink control channel (e.g., PUCCH) of a UE in a base station/cell where an uplink (UL) subband or downlink (DL) subband configuration has been made to support full-duplex communication in a wireless mobile communication system. In particular, the disclosure proposes a PUCCH resource allocation method for transmitting uplink control information through a UL subband.

Time division duplex (TDD) is a duplexing method widely used in commercial new radio (NR), i.e., 5G mobile communication systems. In TDD, time-domain radio resources are divided into downlink slots and uplink slots, and downlink slots are usually distributed at a higher ratio than uplink slots according to the distribution ratio of uplink traffic and downlink traffic. However, this limitation of the uplink slot negatively affects coverage and latency. Full-duplex communication may be applied as a technology for addressing such issues.

Full-duplex communication is technology for simultaneously performing transmission and reception using the same time and frequency resources. From a base station perspective, Full-duplex communication is a method that is applied in a manner to simultaneously perform DL transmission and UL reception. From a UE perspective, DL reception and UL transmission may also be simultaneously performed. In other words, both the base station and the UE may support full duplex. However, unlike the base station, for which self-interference cancellation is structurally easy, in the UE, DL reception performance is prone to be affected by self-interference of UL transmission signals. Therefore, it is generally considered that the base station operates in full-duplex communication and the UE operates in half-duplex communication. Further, a non-overlapping subband full duplex method where the base station reduce self-interference by using separate frequences for simultaneous DL transmission and UL reception instead of using the same resource.

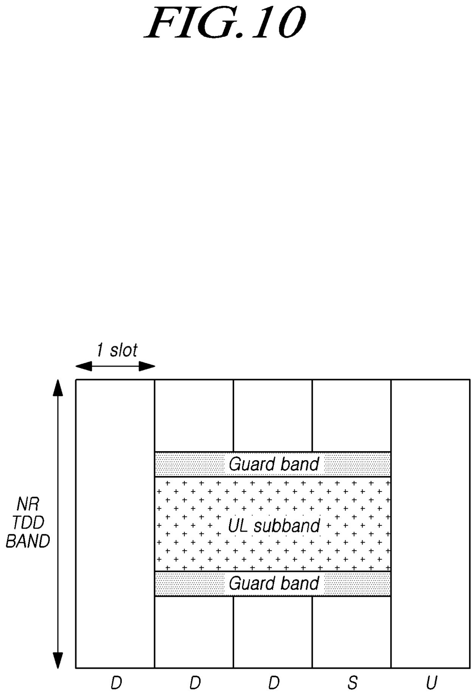

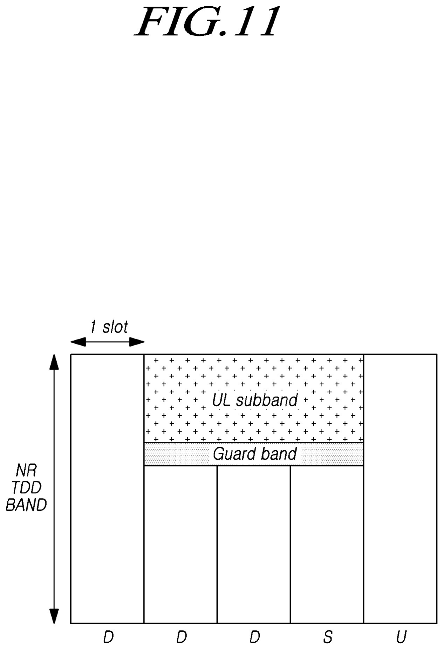

In other words, FIGS. 10 and 11 illustrate an example in which DL slots and UL slots are configured in a ratio of 4:1 in a NR frequency band. However, some symbols of the last DL slot may be a special slot including a flexible symbol for DL/UL transition. As described above, when a time division duplex (TDD) configuration is implemented, an uplink subband for supporting UL transmission of the UE may be configured in some (or all) DL slots of the corresponding DL slots. When the UL subband is set in a DL slot, the UL subband may be configured in the center of the corresponding frequency band as shown in FIG. 10. Or the UL subband may be configured at the edge of the corresponding frequency band as shown in FIG. 11. In this case, a guard band may be configured between the UL subband and the downlink subband (DL subband) in the corresponding slot.

The description of the disclosure may be substantially applicable to various other full-duplex application scenarios. For example, the full duplex application scenario may include full duplex operation in an unpaired spectrum , or in a downlink (DL) frequency band or an uplink (UL) frequency band of a paired spectrum. Furthermore, the description of the disclosure may also apply to cases in which subband non-overlapping full duplex or pure full duplex (i.e., DL transmission and UL reception simultaneously in the same frequency resource) is supported only on the base station side, and a half duplex operation is performed by the UE. In addition, the description of the disclosure may be equally apply to scenarios where both the base station and the UE supports non-overlapping subband full duplex or pure full duplex.

In NR, the uplink-downlink (UL-DL) slot configuration is performed in units of cells through cell-specific RRC signaling. In other words, patterns of DL symbols, UL symbols, and flexible symbols within a predetermined periodicity are configured through the RRC message 'tdd-UL-DL-ConfigurationCommon' for the corresponding UL-DL slot configuration. Additionally, through 'tdd-UL-DL-ConfigurationDedicated' which is UE-specific RRC signaling, only flexible symbols configured through the 'tdd-UL-DL-ConfigurationCommon' may be reallocated as UL symbols, DL symbols, or flexible symbols for each UE. Alternatively, a method for indicating a dynamic slot format through a UE-group common PDCCH has also been defined. To that end, NR also supports a slot format indication method in a dynamic form through DCI format 2_0.

According to the above-described slot configuration method, a one symbol may be configured or indicated as one of DL, UL, or Flexible. FIG. 10 illustrates an example in which a slot format is set as DDDSU through the typical slot configuration. D refers to a down link slot, which means that all OFDM symbols constituting the corresponding slot are set as DL. U refers to an uplink slot, which means that all OFDM symbols constituting the corresponding slot are set as UL. S refers to a special slot, which means a slot including a flexible symbol for DL/UL transition. In general, the special slot may be composed of 12 DL symbols and 2 flexible symbols out of a total of 14 symbols for a normal CP. Alternatively, it may be composed of 10 DL symbols, 2 flexible symbols, and 2 UL symbols. In other words, within a one TDD carrier, one symbol was set or indicated as only one of DL, UL, or flexible.

However, when the UL subband is configured in a DL slot as shown in FIGS. 10 and 11, DL transmission or UL transmission may occur simultaneously for each frequency resource in the corresponding symbol. As described above, a DL slot or symbol including a UL subband or a UL slot or symbol including a DL subband will be referred to as an SBFD slot or an SBFD symbol in the disclosure.

According to the uplink transmission method of the UE in the NR system, the base station may configure up to four uplink bandwidth parts (UL BWPs) for uplink transmission of the UE. In this case, one of the configured UL BWPs is activated, and based on this, radio resource allocation for UL transmission is performed. In other words, UL transmission of the UE is performed through the physical resource block (PRB) resources of the UL BWP activated for the UE in the UL slot or symbol (or flexible symbol) as configured or indicated by the base station.

The UE may transmit uplink control information (UCI) through the PUCCH. The UCI type transmitted through the PUCCH by the UE includes HARQ-ACK information, scheduling request (SR), channel state information (CSI), or the like. The PUCCH resources for UCI transmission of the UE are also based on the UL BWP. In other words, when configuring the UL BWP for a UE by the base station, it includes PUCCH resource allocation information for the corresponding UL BWP. The corresponding PUCCH resource allocation information includes PUCCH resource index information for each PUCCH resource, frequency hopping configuration information, starting PRB information which is frequency resource allocation information before frequency hopping or when frequency hopping is not configured, secondHopPRB information for frequency hopping, PUCCH format information, etc. Further, the PUCCH resource configuration information in the shared spectrum may include PRB interlace configuration information for PUCCH transmission.

Along with the PUCCH resource allocation information, PUCCH resource set configuration may be made for a UL BWP. Each PUCCH resource set configuration information includes PUCCH resource set index information, PUCCH resource list information composed of a set of the PUCCH resource indexes constituting the corresponding PUCCH resource set, maxpayloadsize information of the corresponding PUCCH resource set, etc. Up to four PUCCH resource sets may be configured for a UL BWP, and the first PUCCH resource set may include up to 32 PUCCH resources, while the remaining PUCCH resource sets may include up to 8 PUCCH resources.

As illustrated in FIGS. 10 and 11, the UE may perform uplink transmission through the UL subband of SBFD symbols. In this case, due to the difference between the bandwidth of the UL subband and the bandwidth of the UL BWP activated for the uplink transmission of the UE, problems may occur when PUCCH resource allocation for the UL subband is performed based on the PUCCH resources configured based on the UL BWP. In other words, PUCCH resources according to the PUCCH-config information configured in the UL BWP unit may not be included in the frequency band of the UL subband. In this case, when PUCCH resource allocation in the UL subband is performed based on the PUCCH-config information at the UL BWP unit, a method for reinterpreting it by the UE or a separate PUCCH resource allocation method needs to be defined.

Therefore, the disclosure proposes a method for allocating PUCCH resources for the UL subband of an SBFD symbol.

### Embodiment 1. Implicit configuration method

As described above, when PUCCH resource allocation is performed based on PUCCH-config information from the existing UL BWP unit, a method for reinterpreting this with PUCCH resources in the UL subband may be defined. In other words, a PUCCH configuration for PUCCH resource allocation in the UL subband may be implicitly defined.

As a method of implicit PUCCH resource configuration for the UL subband, among the PUCCH resources set in the UL BWP unit, the available PUCCH resources for PUCCH resource allocation in the UL subband may be limited, and PUCCH resource allocation through the UL subband may be limited to be performed only for the available PUCCH resources. In this case, as in the existing method, PUCCH transmission resource allocation through the UL subband is performed based on the existing PUCCH configuration information configured for each UL BWP without separate PUCCH resource configuration for the UL subband by the base station. Specifically, it may be defined that PUCCH resource allocation is performed through the UL subband based on the PUCCH resources and PUCCH resource set configured for the UL BWP activated for UL transmission through the UL subband, i.e., the UL BWP including the UL subband, in a UE.

However, during PUCCH transmission through the UL subband, it may be limited to allocating only those PUCCH resources whose frequency resources are completely included in the UL subband as PUCCH transmission resources through the UL subband of the SBFD symbol. In other words, a UE may be defined to interpret the PUCCH resource configuration or indication information for the UCI transmission based on the PUCCH resources and PUCCH resource set configured for the activated UL BWP including the UL subband when UCI transmission through the UL subband is configured or indicated by the base station in the SBFD symbol, and the UCI transmission is configured or indicated to be performed through PUCCH.

However, in this case, the frequency resources of the PUCCH resource configured or indicated by the base station may additionally be limited to be completely included in the frequency band of the UL subband. In other words, when transmitting UCI through the UL subband, the UE may expect to be allocated only those PUCCH resources completely included in the frequency band of the UL subband among the PUCCH resources of the activated UL BWP from the base station. Accordingly, when the PUCCH resource configured or indicated by the base station is not completely included in the UL subband, the UE may be defined to drop the UCI transmission or to transmit it through the subsequent first UL slot or symbols. Further, in this case, when there is no PUCCH resource completely included in the UL subband among the PUCCH resources configured for a activated UL BWP for the UE, the UE may be defined not to expect PUCCH transmission through the UL subband of the SBFD symbol. In other words, UCI transmission through the UL subband may be limited to be performed only through PUSCH.

As another method of implicitly defining PUCCH resources for UCI transmission through the UL subband, a rule for mapping PUCCH resources configured based on the UL BWP to PUCCH resources in the UL subband may be defined. In other words, each PUCCH resource configured for the UL BWP (i.e., the PUCCH resource corresponding to each PUCCH resource index) may be mapped 1:1 to the PUCCH resource in the UL subband. Accordingly, an equation for converting the PUCCH resource of the UL BWP to the PUCCH resource of the UL subband may be defined. In this case, the mapping of the UL BWP's PUCCH resource to the UL subband's PUCCH resource may be a frequency resource mapping. In other words, an equation for converting only the frequency resource allocation of the PUCCH resource configured based on the UL BWP to the frequency resources in the UL subband may be defined.

In this case, all PUCCH resources of all indexes of the UL BWP may be subject to the frequency resource mapping, or only some PUCCH resources among all the PUCCH resources may be limited to be subject to the frequency resource mapping. In this case, when the frequency resource mapping is limited to some PUCCH resources, the PUCCH resources subject to the frequency resource mapping may be limited to those that are not completely included in the UL subband, i.e., PUCCH resources partially or wholly overlapping the guardband or DL subband on the frequency axis. As parameters for mapping PUCCH resources configured based on the UL BWP to PUCCH resources for the UL subband, the frequency allocation information of the UL BWP, i.e., the frequency position and bandwidth information of the UL BWP, and the PRB allocation information of PUCCH resources based on the UL BWP, and the frequency allocation information of the UL subband, i.e., the frequency position and bandwidth information of the UL subband, may determine the mapping.

### Embodiment 2. Explicit configuration method

When configuring a UL BWP for a UE, when the UL BWP includes a UL subband, it may be defined to include PUCCH-config information for the UL subband of the SFBD symbol and the corresponding PUCCH resource/PUCCH resource set configuration information separately from the PUCCH-config information targeting existing UL slots or symbols and the corresponding PUCCH resource/PUCCH resource set configuration. In other words, a special UL BWP including the UL subband may be separately defined (or, without a separate definition, it may follow the existing UL BWP configuration, but when the UL BWP includes the UL subband, it is referred to as a special UL BWP for convenience of description), and the special UL BWP may be defined to separately include PUCCH-config information based on the entire frequency resource information constituting the special UL BWP targeting UL slots or symbols and PUCCH-config information based on the frequency resource information of the UL subband included in the special UL BWP. In other words, the special UL BWP may be defined to include both PUCCH-config information and the corresponding PUCCH resource/PUCCH resource set configuration information for PUCCH resource configuration or indication in UL slots/symbols targeting the entire frequency band of the BWP and PUCCH-config information and the corresponding PUCCH resource/PUCCH resource set configuration information for PUCCH resource configuration or indication in SBFD slots/symbols targeting the UL subband. In other words, PUCCH-config may be distinguished as PUCCH-config-UL targeting UL slots/symbols and PUCCH-config-SBFD targeting SBFD slots/symbols. (However, this is an example, and the disclosure is not limited by the name.)

Alternatively, it may be defined to distinguish between PUCCH resource configuration information or PUCCH resource set configuration information targeting the entire band of the UL BWP of existing UL slots/symbols and PUCCH resource configuration information or PUCCH resource set configuration information targeting the UL subband of SBFD slots/symbols only for the PUCCH-config set for the UL BWP. In other words, it may be defined to include PUCCH resource configuration information or PUCCH resource set configuration information for the UL subband separately from the existing PUCCH resource configuration information or PUCCH resource set configuration information. In other words, it may be distinguished as PUCCH-resource-UL or PUCCH-resource set-UL and PUCCH-resource-SBFD or PUCCH-resource set-SBFD. (However, this is an example, and the disclosure is not limited by the name.)

Alternatively, when configuring a PUCCH resource or PUCCH resource set, it may be defined to include a parameter that indicates whether the PUCCH resource or PUCCH resource set is targeting the entire band of the UL BWP of UL slots/symbols or is targeting the UL subband of SBFD slots/symbols.

As described above, in the case where the PUCCH resource configuration for the UL subband of the SBFD symbol is made separately, the UE may interpret the PUCCH resource allocation information based on the PUCCH-resource/PUCCH-resource set , in which the SBFD symbol target PUCCH-config-SBFD information or PUCCH-resource-SBFD, PUCCH-resource set-SBFD information or indication parameter is the UL subband target resource or resource set of the SBFD symbol/slot, when the base station configures or indicates the PUCCH resource transmission through the SBFD symbol.

Further, the special UL BWP including separate PUCCH configuration information for the UL subband may be a dedicated BWP configured for each UE and may be configured for each UE through UE-specific RRC signaling. Alternatively, the special UL BWP may be a common BWP and be configured in a specific UE group unit or cell unit through UE-group common or cell-specific RRC signaling.

As another method for explicit PUCCH configuration for the UL subband, the PUCCH configuration for the UL subband may be defined to be made UL subband-specifically or based on the DL BWP including the UL subband. In other words, when configuring the UL subband at the base station, regardless of each UE's UL BWP configuration information and the corresponding PUCCH-config information, separate UL subband specific PUCCH-config information for PUCCH resource allocation through the UL subband may be configured and transmitted to each UE. Alternatively, the base station may define a special DL BWP that includes the UL subband and include PUCCH-config information for the UL subband in the configuration of the special DL BWP. When UL subband specific PUCCH-config configuration is made, the UL subband specific PUCCH-config information may be included in the UL subband configuration information and transmitted through UE-specific RRC signaling or through UE-group common signaling or cell-specific RRC signaling. Alternatively, UL subband specific PUCCH-config information may be transmitted separately through UE-specific RRC signaling or through UE-group common signaling or cell-specific RRC signaling.

Further, when the base station configures the UL subband, the UL subband may be configured whether to support PUCCH transmission in the UL subband. In this case, only when the base station is configured to support PUCCH transmission through a UL subband, the UE applies the above-described PUCCH resource allocation method to transmit UCI through the PUCCH resource of the UL subband. However, whether to support the PUCCH transmission may be separately configured according to whether PUCCH repetition is configured or may be defined to support PUCCH transmission through the UL subband only when PUCCH repetition is configured. In this case, the PUCCH transmission support configuration may be transmitted to the UE through UE-specific or cell-specific RRC signaling or UE-group common RRC signaling.

Hereinafter, specific operations for PUCCH transmission of the UE based on the above-described scheme are described.

A UE receives PUCCH resource configuration information for UCI transmission including HARQ-ACK information for the UE and one or more PUCCH resource set configuration information composed of one or more PUCCH resources for each of the initial UL BWP and dedicated UL BWP configured for the UE according to the above-described scheme.

The UE determines a PUCCH resource for transmitting UCI including a HARQ-ACK information based on the PUCCH resource configuration information and PUCCH resource set configuration information. The PUCCH resource set and PUCCH resource index for determining the PUCCH resource are determined by the payload size of the UCI and the PUCCH resource indicator indication information included in the DCI format, and the lowest CCE index information where the DCI transmission is made.

When UL subband configuration for supporting SBFD operation and corresponding SBFD slot or SBFD symbol configuration is made for the UE, the UE may receive additional PUCCH resource configuration information for UCI transmission including HARQ-ACK information in the SBFD symbol in addition to the PUCCH resource configuration information configured for each UL BWP for UCI transmission including HARQ-ACK information in the existing UL symbol.

As an example of PUCCH resource configuration for UCI transmission including HARQ-ACK information in the SBFD symbol, the PUCCH resource configuration in the SBFD symbol may be made implicitly.

As a method of implicit configuration, PUCCH resource allocation through the UL subband of the SBFD symbol may be indicated based on the existing PUCCH resource and PUCCH resource set configured for the activated UL BWP. However, in this case, PUCCH resource allocation in the SBFD symbol may be limited to be made only for PUCCH resources completely included in the UL subband among the PUCCH resources constituting the PUCCH resource set. In other words, only PUCCH resources completely included in the UL subband according to a PUCCH resource configuration are determined as available PUCCH resources in the SBFD symbol, and when a UCI transmission includes the SBFD symbol, PUCCH resource allocation through the available PUCCH resource may be limited. In this case, in order to support UCI transmission including HARQ-ACK through the UL subband of the SBFD symbol at a UE, a PUCCH resource set configured for the UE may include at least one available PUCCH resource.

Alternatively, the UL subband configuration information for a UE may include separate PUCCH resource configuration information and PUCCH resource set configuration information for UCI transmission of the UE through the UL subband. As an example, separate PUCCH configuration information, PUCCH-configULSB, may be defined for PUCCH resource allocation for UCI transmission including HARQ-ACK information of the UE in the SBFD symbol (this is merely an example and the disclosure is not limited thereto). The PUCCH-configULSB may be configured cell-specifically (i.e., configured in UL subband units) or UE-specifically.

As an example of cell-specific configuration method, the PUCCH-configULSBcommon configuration information may include reference PUCCH resource for configuring one or more PUCCH resource sets for a UL subband and PUCCH resource set size (i.e., number of PRBs) information for configuring the PUCCH resource set from the reference PUCCH resource. Accordingly, a separate PUCCH resource table for reference PUCCH resource configuration for the UL subband may be defined. Further, the reference PUCCH resource table may include information such as PUCCH format, first symbol, number of symbols, PRB offset, set of initial CS indexes for each index.

Further, one or more tables may be defined for the PUCCH resource table for the UL subband according to the UCI payload size. Accordingly, PUCCH-configULSBcommon may include separate PUCCH resource set, i.e., configuration information for each PUCCH resource table index and number of PRBs information for each UCI payload size. Further, the PRB offset information of the table may be offset information from the lowest PRB of the UL subband.

When PUCCH-configULSB is made UE-specifically, a PUCCH-configULSB may be configured based on the UL subband according to the UL subband configuration made for a UE, similar to PUCCH-config configured for each existing UL BWP. Accordingly, PUCCH-configULSB includes PUCCH resource configuration-related information and PUCCH resource set configuration information based on the frequency resources of the UL subband. In this case, the frequency resource allocation of the PUCCH resource (i.e., startingPRB and secondHopPRB allocation) may be made based on the PRB index constituting the UL subband. For example, the lowest PRB of the UL subband may be set to 0, and the PRB offset value therefrom may be set. Alternatively, it may be set based on the PRB index of the UL BWP as in a manner similar to the typical approach.

Alternatively, in configuring the PUCCH resource and PUCCH resource set through the existing PUCCH configuration information, such as PUCCH-configcommon or PUCCH-config message, it may be defined to include separate PUCCH resource configuration information or PUCCH resource set configuration information to be applied in the UL subband of the SBFD symbol, in addition to the existing PUCCH resource configuration information or PUCCH resource set configuration information to be applied in the existing UL symbols. For example, the PUCCH-config configuration information for the UL BWP, including the UL subband, may be configured to include the existing PUCCH resource set configuration information for the UL symbols not including the UL subband and the PUCCH resource set configuration information separately for SBFD symbols.

In this case, the PUCCH resource configuration information included in the PUCCH-config may be commonly applied for the existing PUCCH resource set configuration for the UL symbols and the new PUCCH resource set configuration for the SBFD symbols. In this case, the PUCCH resource set configuration for the SBFD symbols may be limited to be configured targeting the PUCCH resources available in the SBFD symbols among the PUCCH resources included in the PUCCH-config, i.e., as mentioned above, so that only the PUCCH resources completely included in the UL subband are included in the PUCCH resource set for the SBFD symbols.

Alternatively, a PUCCH-config configuration information may be configured to include the PUCCH resource configuration information for UL symbols and separate PUCCH resource configuration information for SBFD symbols together with the PUCCH resource set configuration for UL symbols and separate PUCCH resource set configuration information for SBFD symbols. Accordingly, the PUCCH resource allocation including the SBFD symbols may be made based on the PUCCH resource set configured for the SBFD symbols or additionally separate PUCCH resources for the SBFD symbols. Further, in this case, the frequency resource allocation included in the separate PUCCH resource configuration information (i.e., startingPRB and secondHopPRB allocation) may be made based on the PRB index constituting the UL subband. For example, the lowest PRB of the UL subband may be set to 0, and the PRB offset value therefrom may be set. Alternatively, it may be set based on the PRB index of the UL BWP as in a manner similar to the typical approach.

As described above, when a separate PUCCH resource configuration for SBFD symbols is made implicitly or explicitly, in interpreting the PUCCH resource allocation information of the base station at a UE, it may be defined to interpret whether PUCCH resource allocation is interpreted to be made based on the existing PUCCH resource configuration or PUCCH resource allocation is interpreted to be made based on separate PUCCH resource configuration for SBFD symbols according to the type of the symbol where the UCI transmission including HARQ-ACK information is indicated (i.e., whether it is the existing UL symbol or flexible symbol not including the UL subband or the SBFD symbol where the UL subband is configured). When the symbol determined for PUCCH transmission including HARQ-ACK information in the UE includes at least one or more SBFD symbols, the PUCCH transmission resource allocation may be defined to be interpreted based on the PUCCH resource configuration for the SBFD symbols. Alternatively, only when all the symbols where PUCCH transmission including HARQ-ACK information is determined in the UE are SBFD symbols, the PUCCH transmission resource allocation may be defined to be interpreted based on the PUCCH resource configuration for the SBFD symbols. Alternatively, the base station may explicitly transmit indication information regarding the same to the UE through L1 control signaling.

All examples formed by combinations of the above-described embodiments 1 and 2 are included in the scope of the invention according to the disclosure.

Hereinafter, configurations of a UE and a base station which may perform all or some of the embodiments described above in connection with FIGS. 1 to 11 are described with reference to the drawings. The above-described description may be omitted to avoid redundant description; in that case, the omitted content may be deemed to apply mutatis mutandis to the following description, provided it does not contradict the technical spirit of the invention.

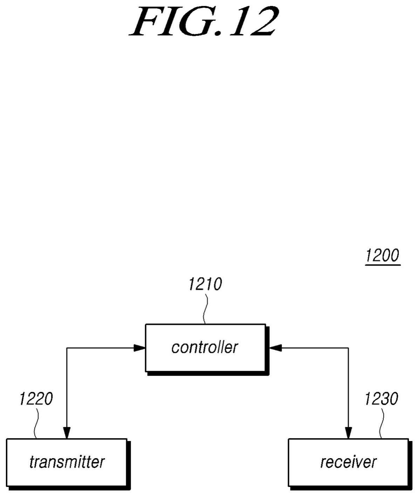

FIG. 12 is a block diagram illustrating a UE 1200 according to an embodiment.

Referring to FIG. 12, a UE 1200 according to an embodiment includes a transmitter 1220, a receiver 1230, and a controller 1210 controlling operations of the transmitter and the receiver.

The controller 1210 controls the overall operation of the UE 1200 according to the method for transmitting an uplink control channel in full-duplex communication required by the embodiments described above..

The controller 1210 may receive uplink control channel configuration information. The controller 1210 may receive configuration information for up to four uplink bandwidth parts (UL BWPs) from the base station for transmitting uplink control information. In this case, one of the configured UL BWPs is activated. Based on this activation, radio resource allocation for UL transmission is performed.

The controller 1210 may receive uplink control channel configuration information for UCI transmission, including HARQ feedback information, for each uplink bandwidth part configured for the UE. In other words, the controller 1210 may receive PUCCH resource configuration information and at least one PUCCH resource set configuration information, where the PUCCH resource set is composed of at least one PUCCH resource.

The PUCCH resource configuration information may include PUCCH resource index information, frequency hopping setting information, PUCCH format information, or the like for each PUCCH resource. Further, the PUCCH resource set configuration information may include PUCCH resource set index information and PUCCH resource list information composed of a set of PUCCH resource indexes constituting the PUCCH resource set. Up to four PUCCH resource sets may be configured for one uplink bandwidth part, and up to 32 PUCCH resources may be included for the first PUCCH resource set, while up to 8 PUCCH resources may be included for the remaining PUCCH resource sets.

According to an embodiment, if a subband full duplex (SBFD) symbol is configured to support SBFD operation for the UE, the controller 1210 may further receive PUCCH resource configuration information and PUCCH resource set configuration information for UCI transmission, such as HARQ feedback information, in the SBFD symbol, in addition to the PUCCH resource configuration information and PUCCH resource set configuration information for existing uplink symbols.

The controller 1210 may determine an uplink control channel resource based on at least one of the following: uplink control channel resource indication information (PUCCH resource indicator), index information of a control channel element (CCE) receiving downlink control information, and payload size information of uplink control information.

The controller 1210 may determine PUCCH resources for transmitting UCI, such as HARQ feedback information, based on PUCCH resource configuration information and PUCCH resource set configuration information. The controller 1210 may determine the PUCCH resource set index and PUCCH resource index, based on the UCI payload size information, PUCCH resource indication information included in the DCI format, and the lowest CCE index used for DCI transmission, respectively.

In this case, the uplink control channel resource may be distinctly determined depending on whether a symbol allocated for transmission of the uplink control channel includes an SBFD symbol where an uplink subband for full-duplex communication is configured. According to one example, if the allocated symbol includes an SBFD symbol, it may corresponding to a case where all symbols used for uplink control channel transmission are the SBFD symbol. Alternatively, it may correspond to a case where at least one of all symbols used for uplink control channel transmission is the SBFD symbol.

According to an example, when the symbol allocated for the transmission of the uplink control channel includes the SBFD symbol, the uplink control channel resource where the UCI is transmitted may be determined among uplink control channel resources included in the uplink subband in a frequency domain among uplink control channel resources constituting an uplink control channel resource set (PUCCH resource set). In this case, the PUCCH resource allocation through the uplink subband in the SBFD symbol may be indicated based on the existing PUCCH resources and PUCCH resource sets configured for the activated uplink bandwidth part, as is typically done.

However, in this case, the PUCCH resource allocation in the SBFD symbol may be limited so that PUCCH resource allocation is made only to PUCCH resources completely included in the uplink subband on the frequency axis among the PUCCH resources constituting the PUCCH resource set. In other words, the controller 1210 may determine only the PUCCH resources where all of the frequency resources of the PUCCH according to the PUCCH resource configuration completely included in the uplink subband, as PUCCH resources available in the SBFD symbols. Therefore, when the symbols used for UCI transmission include SBFD symbols, the PUCCH resource allocation through the available PUCCH resources may be restricted. In this case, to support UCI transmission, such as HARQ-ACK, through the uplink subband of the SBFD symbol in the UE, the PUCCH resource set configured for the UE may include at least one available PUCCH resource.

According to another example, when the symbols allocated for transmission of the uplink control channel include SBFD symbols, the uplink control channel resources where the UCI is transmitted may be determined based on uplink control channel configuration information separately configured for the SBFD symbols. In other words, the controller 1210 may further receive separate PUCCH configuration information for the SBFD symbols, distinctly from the existing PUCCH configuration information.

In this case, the uplink subband configuration information for the UE may include separate PUCCH resource configuration information and PUCCH resource set configuration information for UCI transmission through the uplink subband. For example, PUCCH-configULSB, which is separate PUCCH configuration information, may be defined for PUCCH resource allocation for UCI transmission, including HARQ-ACK information of the UE in the SBFD symbol. The PUCCH-configULSB may be configured cell-specifically, i.e., on a per-uplink subband basis, or UE-specifically.

When PUCCH-configULSB is configured cell-specifically, the PUCCH-configULSBcommon configuration information may include reference PUCCH resources for configuring one or more PUCCH resource sets for a uplink subband and the PUCCH resource set size, i.e., information about the number of PRBs, for configuring PUCCH resource sets from the reference PUCCH resources. Accordingly, a separate PUCCH resource table for setting reference PUCCH resources targeting the uplink subband may be defined. In this case, the reference PUCCH resource table may include information such as PUCCH format, first symbol, number of symbols, PRB offset, and set of initial CyclicShift (CS) indexes for each index.

When the PUCCH-configULSB is configured UE-specifically, the PUCCH-configULSB may be configured based on the uplink subband according to the uplink subband configuration made for the UE. Accordingly, the PUCCH-configULSB may include PUCCH resource configuration information and PUCCH resource set configuration information based on the frequency resources of the uplink subband. In this case, the frequency resource allocation of the PUCCH resource may be performed based on the PRB index constituting the uplink subband. For example, the lowest PRB of the uplink subband may be set to 0, and a PRB offset value therefrom may be set. Alternatively, it may be set based on the PRB index of the uplink bandwidth part as in the typical manner.

According to another example, the uplink control channel resource where the UCI is transmitted may be determined based on uplink control channel resource set configuration information separately configured for the SBFD symbol, when the symbol allocated for the transmission of the uplink control channel includes the SBFD symbol. In other words, the existing PUCCH configuration information may include separate PUCCH resource set configuration information to be applied in the uplink subband of the SBFD symbol, in addition to the PUCCH resource configuration information or PUCCH resource set configuration information to be applied in the existing uplink symbols.

In this case, the PUCCH-config configuration information for the uplink bandwidth part including the uplink subband may include PUCCH resource set configuration information for the SBFD symbol, separate from the existing PUCCH resource set configuration information for the uplink symbols not including the uplink subband. In other words, the existing PUCCH configuration information may include separate PUCCH resource set configuration information to be applied in the uplink subband of the SBFD symbol, in addition to the PUCCH resource set configuration information to be applied in the existing uplink symbols.

In this case, the PUCCH resource configuration information included in the PUCCH-config may be commonly applied for the existing PUCCH resource set configuration for the uplink symbols and the new PUCCH resource set configuration for the SBFD symbols. In this case, the PUCCH resource set configuration for the SBFD symbol may be set for the PUCCH resources available in the SBFD symbol among the PUCCH resources included in the PUCCH-conFIG. In other words, as described above, only the PUCCH resources whose frequency resources are completely included in the uplink subband may be restricted to be included in the PUCCH resource set for the SBFD symbol.

According to another example, the uplink control channel resource where the UCI is transmitted may be determined based on uplink control channel resource set configuration information configured separately for the SBFD symbol, and uplink control channel resource configuration information configured separately for the SBFD symbol, when the symbol allocated for the transmission of the uplink control channel includes the SBFD symbol. In other words, the existing PUCCH configuration information may include PUCCH resource set configuration information for the uplink symbols and separate PUCCH resource set configuration information for the SBFD symbols. Further, the existing PUCCH configuration information may include PUCCH resource configuration information for the uplink symbols and separate PUCCH resource configuration information for the SBFD symbols.

Accordingly, the PUCCH resource allocation including the SBFD symbol may be performed based on the PUCCH resource set configured for the SBFD symbol or on separate PUCCH resources additionally configured for the SBFD symbol. Further, in this case, the frequency resource allocation included in the separate PUCCH resource configuration information may be performed based on the PRB index constituting the uplink subband. For example, the lowest PRB of the uplink subband may be set to 0, and a PRB offset value therefrom may be set. Alternatively, it may be set based on the PRB index of the uplink bandwidth part as in the conventional manner.

In order to determine the PUCCH resource to be used for UCI transmission, the controller 1210 may determine whether to interpret that the PUCCH resource allocation has been made based on the existing PUCCH resource configuration or interpret that the PUCCH resource configuration has been made based on the separate PUCCH resource configuration for the SBFD symbol according to the type of symbol indicated for UCI transmission in interpreting the PUCCH resource allocation information of the base station.

According to an embodiment, the controller 1210 may interpret it as a PUCCH resource allocation for the SBFD symbol only when all symbols where the uplink control channel transmission is performed are SBFD symbols. Alternatively, the controller 1210 may interpret it as a PUCCH resource allocation for the SBFD symbol when at least one symbol among all symbols where the uplink control channel transmission is performed is an SBFD symbol.

In contrast, the controller 1210 may interpret the PUCCH resource allocation according to the indication information received via the physical layer control signaling (L1 control signaling) received from the base station.

The controller 1210 may transmit uplink control information to the base station using the determined uplink control channel resources.

According to the embodiments described above, an uplink control channel may be transmitted and received efficiently within a slot or symbol to which full-duplex communication is applied.

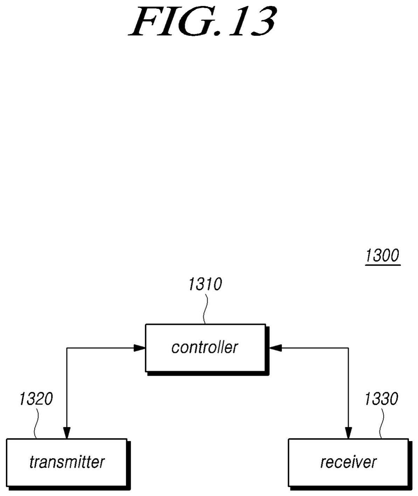

FIG. 13 is a block diagram illustrating a base station 1300 according to an embodiment.

Referring to FIG. 13, a base station 1300 according to an embodiment includes a transmitter 1320, a receiver 1330, and a controller 1310 controlling operations of the transmitter and the receiver.

The controller 1310 controls the overall operation of the base station 1300 according to the method for receiving an uplink control channel in full-duplex communication required to the embodiments described above. The transmitter 1320 transmits downlink control information and data or messages to the UE via a corresponding channel. The receiver 1330 receives uplink control information and data or messages from the UE via a corresponding channel.

The controller 1310 may transmit uplink control channel configuration information. The controller 1310 may transmit configuration information for up to four uplink bandwidth parts (UL BWPs) to the UE for the transmission of uplink control information. In this case, one of the configured UL BWPs is activated. Based on this activation, radio resource allocation for UL transmission is performed.

The controller 1310 may transmit uplink control channel configuration information for UCI reception, including HARQ feedback information, for each uplink bandwidth part configured for the UE. In other words, the controller 1310 may transmit, to the UE, PUCCH resource configuration information and at least one PUCCH resource set configuration information composed of at least one PUCCH resource.

The PUCCH resource configuration information may include PUCCH resource index information, frequency hopping setting information, PUCCH format information, or the like for each PUCCH resource. Further, the PUCCH resource set configuration information may include PUCCH resource set index information and PUCCH resource list information composed of a set of PUCCH resource indexes constituting the PUCCH resource set. Up to four PUCCH resource sets may be configured for one uplink bandwidth part, and up to 32 PUCCH resources may be included for the first PUCCH resource set, while up to 8 PUCCH resources may be included for the remaining PUCCH resource sets.

According to an embodiment, if a subband full duplex (SBFD) symbol setting is made to support SBFD operation for the UE, the controller 1310 may further receive PUCCH resource configuration information and PUCCH resource set configuration information for UCI transmission, such as HARQ feedback information, in the SBFD symbol, in addition to the PUCCH resource configuration information and PUCCH resource set configuration information for existing uplink symbols.

The controller 1310 may receive the uplink control information through an uplink control channel resource determined based on at least one of uplink control channel resource indication information (PUCCH resource indicator), index information of a control channel element (CCE) transmitting downlink control information, and payload size information of uplink control information.

The UE may determine PUCCH resources for transmitting UCI, such as HARQ feedback information, based on PUCCH resource configuration information and PUCCH resource set configuration information. The UE may determine the PUCCH resource set index and PUCCH resource index for determining PUCCH resources, based on the payload size information of the UCI, PUCCH resource indication information included in the DCI format, and the lowest CCE index information in which DCI transmission is performed, respectively.

In this case, the uplink control channel resource may be distinctly determined according to whether a symbol allocated for reception of the uplink control channel includes an SBFD symbol where an uplink subband for full-duplex communication is configured. According to an example, when the symbol allocated for the reception of the uplink control channel includes the SBFD symbol, it may correspond to only when all symbols where the reception of the uplink control channel is performed are the SBFD symbol. Alternatively, according to another example, when the symbol allocated for the reception of the uplink control channel includes the SBFD symbol, it may correspond to when at least one of all symbols where the reception of the uplink control channel is performed is the SBFD symbol.

According to an example, when the symbol allocated for the reception of the uplink control channel includes the SBFD symbol, the uplink control channel resource where the UCI is received may be determined among uplink control channel resources included in the uplink subband in a frequency domain among uplink control channel resources constituting an uplink control channel resource set (PUCCH resource set). In this case, the PUCCH resource allocation through the uplink subband in the SBFD symbol may be indicated based on the existing PUCCH resources and PUCCH resource sets configured for the activated uplink bandwidth part, as in the existing method.

However, in this case, the PUCCH resource allocation in the SBFD symbol may be limited so that PUCCH resource allocation is made only to PUCCH resources completely included in the uplink subband on the frequency axis among the PUCCH resources constituting the PUCCH resource set. In other words, the UE may determine only the PUCCH resources where all of the frequency resources of the PUCCH according to the PUCCH resource configuration are completely included in the uplink subband, as PUCCH resources available in the SBFD symbols. Therefore, when the symbols used for UCI reception include SBFD symbols, the PUCCH resource allocation through the available PUCCH resources may be restricted. In this case, to support UCI transmission, such as HARQ-ACK, through the uplink subband of the SBFD symbol in the UE, the PUCCH resource set configured for the UE may include at least one available PUCCH resource.

According to another example, when the symbols allocated for reception of the uplink control channel include SBFD symbols, the uplink control channel resources where the UCI is received may be determined based on uplink control channel configuration information separately configured for the SBFD symbols. In other words, the controller 1310 may further transmit separate PUCCH configuration information for the SBFD symbols, distinctly from the existing PUCCH configuration information.

In this case, the uplink subband configuration information for the UE may include separate PUCCH resource configuration information and PUCCH resource set configuration information for UCI transmission through the uplink subband. For example, PUCCH-configULSB, which is separate PUCCH configuration information, may be defined for PUCCH resource allocation for UCI transmission, including HARQ-ACK information of the UE in the SBFD symbol. The PUCCH-configULSB may be configured cell-specifically, i.e., on a per-uplink subband basis, or UE-specifically.

When PUCCH-configULSB is configured cell-specifically, the PUCCH-configULSBcommon configuration information may include reference PUCCH resources for configuring one or more PUCCH resource sets for a uplink subband and the PUCCH resource set size, i.e., information about the number of PRBs, for configuring PUCCH resource sets from the reference PUCCH resources. Accordingly, a separate PUCCH resource table for setting reference PUCCH resources targeting the uplink subband may be defined. In this case, the reference PUCCH resource table may include information such as PUCCH format, first symbol, number of symbols, PRB offset, and set of initial Cyclic Shift (CS) indexes for each index.

Further, the PUCCH resource table may include one or more tables according to the UCI payload size. Accordingly, PUCCH-configULSBcommon may include separate PUCCH resource sets, i.e., each PUCCH resource table index setting information and information about the number of PRBs, for each UCI payload size. Further, the PRB offset information of the table may be the offset information from the lowest PRB of the uplink subband.

When the PUCCH-configULSB is configured UE-specifically, the PUCCH-configULSB may be configured based on the uplink subband according to the uplink subband configuration for the UE. Accordingly, the PUCCH-configULSB may include PUCCH resource configuration information and PUCCH resource set configuration information based on the frequency resources of the uplink subband. In this case, the frequency resource allocation of the PUCCH resource may be performed based on the PRB index constituting the uplink subband. For example, the lowest PRB of the uplink subband may be set to 0, and a PRB offset value therefrom may be set. Alternatively, it may be set based on the PRB index of the uplink bandwidth part as in the conventional manner.

According to another example, the uplink control channel resource where the UCI is received may be determined based on uplink control channel resource set configuration information separately configured for the SBFD symbol, when the symbol allocated for the reception of the uplink control channel includes the SBFD symbol. In other words, the existing PUCCH configuration information may include separate PUCCH resource set configuration information to be applied in the uplink subband of the SBFD symbol, in addition to the PUCCH resource configuration information or PUCCH resource set configuration information to be applied in the existing uplink symbols.

In this case, the PUCCH-config configuration information for the uplink bandwidth part including the uplink subband may include PUCCH resource set configuration information for the SBFD symbol, separate from the existing PUCCH resource set configuration information for the uplink symbols not including the uplink subband. In other words, the existing PUCCH configuration information may include separate PUCCH resource set configuration information to be applied in the uplink subband of the SBFD symbol, in addition to the PUCCH resource set configuration information to be applied in the existing uplink symbols.

In this case, the PUCCH resource configuration information included in the PUCCH-config may be commonly applied for the existing PUCCH resource set configuration for the uplink symbols and the new PUCCH resource set configuration for the SBFD symbols. In this case, the PUCCH resource set configuration for the SBFD symbol may be set for the PUCCH resources available in the SBFD symbol among the PUCCH resources included in the PUCCH-conFIG. In other words, as described above, only the PUCCH resources whose frequency resources completely included in the uplink subband may be restricted to be included in the PUCCH resource set for the SBFD symbol.

According to another example, the uplink control channel resource where the UCI is received may be determined based on uplink control channel resource set configuration information configured separately for the SBFD symbol, and uplink control channel resource configuration information configured separately for the SBFD symbol, when the symbol allocated for the reception of the uplink control channel includes the SBFD symbol. In other words, the existing PUCCH configuration information may include PUCCH resource set configuration information for the uplink symbols and separate PUCCH resource set configuration information for the SBFD symbols. Further, the existing PUCCH configuration information may include PUCCH resource configuration information for the uplink symbols and separate PUCCH resource configuration information for the SBFD symbols.

Accordingly, the PUCCH resource allocation including the SBFD symbol may be performed based on the PUCCH resource set configured for the SBFD symbol or on separate PUCCH resources additionally configured for the SBFD symbol. Further, in this case, the frequency resource allocation included in the separate PUCCH resource configuration information may be performed based on the PRB index constituting the uplink subband. For example, the lowest PRB of the uplink subband may be set to 0, and a PRB offset value from it may be set. Alternatively, it may be set based on the PRB index of the uplink bandwidth part as in the conventional manner.

In order to determine the PUCCH resource to be used for UCI transmission, the UE may determine whether to interpret that the PUCCH resource allocation has been made based on the existing PUCCH resource configuration or interpret that the PUCCH resource configuration has been made based on the separate PUCCH resource configuration for the SBFD symbol according to the type of symbol indicated for UCI transmission in interpreting the PUCCH resource allocation information of the base station.

According to an embodiment, the UE may interpret it as a PUCCH resource allocation for the SBFD symbol only when all symbols where the uplink control channel transmission is performed are SBFD symbols. Alternatively, the UE may interpret it as a PUCCH resource allocation for the SBFD symbol when at least one symbol among all symbols where the uplink control channel transmission is performed is an SBFD symbol.

In contrast, the controller 1310 may transmit indication information for interpreting the PUCCH resource allocation of the UE through physical layer control signaling (L1 control signaling).

The controller 1310 may receive UCI from the UE using the determined uplink control channel resources.

According to the embodiments described above, an uplink control channel may be transmitted and received efficiently within a slot or symbol to which full-duplex communication is applied.

The embodiments described above may be supported by the standard documents disclosed in at least one of the radio access systems such as IEEE 802, 3GPP, and 3GPP2. That is, the steps, configurations, and parts, which have not been described in the present embodiments, may be supported by the above-mentioned standard documents for clarifying the technical concept of the disclosure. In addition, all terms disclosed herein may be described by the standard documents set forth above.

The above-described embodiments may be implemented by a of various means. For example, the present embodiments may be implemented as hardware, firmware, software, or a combination thereof.

In the case of implementation by hardware, the method according to the present embodiments may be implemented as at least one of an application specific integrated circuit (ASIC), a digital signal processor (DSP), a digital signal processing device (DSPD), a programmable logic device (PLD), a field programmable gate array (FPGA), a processor, a controller, a microcontroller, or a microprocessor.

In the case of implementation by firmware or software, the method according to the present embodiments may be implemented in the form of an apparatus, a procedure, or a function for performing the functions or operations described above. Software code may be stored in a memory unit, and may be driven by the processor. The memory unit may be provided inside or outside the processor, and may exchange data with the processor by a of various well-known means.

In addition, the terms "system", "processor", "controller", "component", "module", "interface", "model", "unit", and the like may generally mean computer-related entity hardware, a combination of hardware and software, software, or running software. For example, the above-described components may be, but are not limited to, a process driven by a processor, a processor, a controller, a control processor, an entity, an execution thread, a program and/or a computer. For example, both the application that is running in a controller or a processor and the controller or the processor may be components. One or more components may be provided in a process and/or an execution thread, and the components may be provided in a single device (e.g., a system, a computing device, etc.), or may be distributed over two or more devices.

The above embodiments of the present disclosure have been described only for illustrative purposes, and those skilled in the art will appreciate that various modifications and changes may be made thereto without departing from the scope and spirit of the disclosure. Further, the embodiments of the disclosure are not intended to limit, but are intended to illustrate the technical idea of the disclosure, and therefore the scope of the technical idea of the disclosure is not limited by these embodiments. The scope of the present disclosure shall be construed on the basis of the accompaing claims in such a manner that all of the technical ideas included within the scope equivalent to the claims belong to the present disclosure.

### CROSS-REFERENCE TO RELATED APPLICATION

This application claims priority under 35 U.S.C. §119(a) to Korean Patent Application No. 10-2023-0006949, filed on January 17, 2023, and Korean Patent Application No. 10-2024-0006821, filed on January 16, 2024, the entire contents of which are incorporated herein by reference. This application also claims priority to the corresponding applications in countries other than the United States for the same reasons, and the entire contents thereof are also incorporated herein by reference.

## Claims

1. A method for transmitting an uplink control channel (physical uplink control channel (PUCCH)) by a UE in full-duplex communication, the method comprising:
receiving uplink control channel configuration information;
determining an uplink control channel resource based on at least one of uplink control channel resource indication information (PUCCH resource indicator), index information of a control channel element (CCE) receiving downlink control information, and payload size information of uplink control information; and
transmitting the uplink control information through the uplink control channel resource,
wherein the uplink control channel resource is distinctly determined according to whether a symbol allocated for transmission of the uplink control channel includes a subband full duplex (SBFD) symbol where an uplink subband for full-duplex communication is configured.

2. The method of claim 1, wherein when the symbol allocated for the transmission of the uplink control channel includes the SBFD symbol, the uplink control channel resource is determined among uplink control channel resources included in the uplink subband in a frequency domain among uplink control channel resources constituting an uplink control channel resource set (PUCCH resource set).

3. The method of claim 1, wherein when the symbol allocated for the transmission of the uplink control channel includes the SBFD symbol, the uplink control channel resource is determined based on uplink control channel configuration information separately configured for the SBFD symbol.

4. The method of claim 1, wherein when the symbol allocated for the transmission of the uplink control channel includes the SBFD symbol, the uplink control channel resource is determined based on uplink control channel resource set configuration information separately configured for the SBFD symbol.

5. The method of claim 1, wherein when the symbol allocated for the transmission of the uplink control channel includes the SBFD symbol, the uplink control channel resource is determined based on uplink control channel resource configuration information separately configured for the SBFD symbol and uplink control channel resource set configuration information configured based on the separately configured uplink control channel resource configuration information.

6. The method of claim 1, wherein when the symbol allocated for the transmission of the uplink control channel includes the SBFD symbol, all symbols where the transmission of the uplink control channel is performed are the SBFD symbol.

7. The method of claim 1, wherein when the symbol allocated for the transmission of the uplink control channel includes the SBFD symbol, at least one of all symbols where the transmission of the uplink control channel is performed is the SBFD symbol.

8. A method for receiving an uplink control channel (physical uplink control channel (PUCCH)) by a base station in full-duplex communication, the method comprising:
transmitting uplink control channel configuration information; and
receiving uplink control information through an uplink control channel resource determined based on at least one of uplink control channel resource indication information (PUCCH resource indicator), index information of a control channel element (CCE) transmitting downlink control information, and payload size information of the uplink control information,
wherein the uplink control channel resource is distinctly determined according to whether a symbol allocated for reception of the uplink control channel includes a subband full duplex (SBFD) symbol where an uplink subband for full-duplex communication is configured.

9. The method of claim 8, wherein when the symbol allocated for the reception of the uplink control channel includes the SBFD symbol, the uplink control channel resource is determined among uplink control channel resources included in the uplink subband in a frequency domain among uplink control channel resources constituting an uplink control channel resource set (PUCCH resource set).

10. The method of claim 8, wherein when the symbol allocated for the reception of the uplink control channel includes the SBFD symbol, the uplink control channel resource is determined based on uplink control channel configuration information separately configured for the SBFD symbol.

11. The method of claim 8, wherein when the symbol allocated for the reception of the uplink control channel includes the SBFD symbol, the uplink control channel resource is determined based on uplink control channel resource set configuration information separately configured for the SBFD symbol.

12. The method of claim 8, wherein when the symbol allocated for the reception of the uplink control channel includes the SBFD symbol, the uplink control channel resource is determined based on uplink control channel resource configuration information separately configured for the SBFD symbol and uplink control channel resource set configuration information configured based on the separately configured uplink control channel resource configuration information.

13. The method of claim 8, wherein when the symbol allocated for the reception of the uplink control channel includes the SBFD symbol, all symbols where the reception of the uplink control channel is performed are the SBFD symbol.

14. The method of claim 8, wherein when the symbol allocated for the reception of the uplink control channel includes the SBFD symbol, at least one of all symbols where the reception of the uplink control channel is performed is the SBFD symbol.

15. A UE transmitting an uplink control channel (physical uplink control channel (PUCCH)) in full-duplex communication, comprising:
a transmitter;
a receiver; and
a controller controlling an operation of the transmitter and the receiver, wherein the controller receives uplink control channel configuration information, determines an uplink control channel resource based on at least one of uplink control channel resource indication information (PUCCH resource indicator), index information of a control channel element (CCE) receiving downlink control information, and payload size information of uplink control information, and transmits the uplink control information through the uplink control channel resource, and
wherein the uplink control channel resource is distinctly determined according to whether a symbol allocated for transmission of the uplink control channel includes a subband full duplex (SBFD) symbol where an uplink subband for full-duplex communication is configured.

16. The UE of claim 15, wherein when the symbol allocated for the transmission of the uplink control channel includes the SBFD symbol, the uplink control channel resource is determined among uplink control channel resources included in the uplink subband in a frequency domain among uplink control channel resources constituting an uplink control channel resource set (PUCCH resource set).

17. The UE of claim 15, wherein when the symbol allocated for the transmission of the uplink control channel includes the SBFD symbol, the uplink control channel resource is determined based on uplink control channel configuration information separately configured for the SBFD symbol.

18. The UE of claim 15, wherein when the symbol allocated for the transmission of the uplink control channel includes the SBFD symbol, the uplink control channel resource is determined based on uplink control channel resource set configuration information separately configured for the SBFD symbol.

19. The UE of claim 15, wherein when the symbol allocated for the transmission of the uplink control channel includes the SBFD symbol, the uplink control channel resource is determined based on uplink control channel resource configuration information separately configured for the SBFD symbol and uplink control channel resource set configuration information configured based on the separately configured uplink control channel resource configuration information.

20. The UE of claim 15, wherein when the symbol allocated for the transmission of the uplink control channel includes the SBFD symbol, all symbols where the transmission of the uplink control channel is performed are the SBFD symbol.
